# EUROPEAN PATENT APPLICATION

(11) **EP 4 543 101 A1**
(43) Date of publication of application: **23.04.2025**
(21) Application number: 23851307.1
(22) Date of filing: 19.05.2023
(51) Int. Cl.: H04W 52/02

(54) **UPLINK TRANSMISSION METHOD AND COMMUNICATION APPARATUS**

(30) Priority: 10.08.2022 CN 202210964540
(71) Applicant: Huawei Technologies Co., Ltd., Shenzhen, Guangdong 518129 (CN)
(72) Inventor: XU, Rui, Shenzhen, Guangdong 518129 (CN); CHEN, Erkai, Shenzhen, Guangdong 518129 (CN); CAO, Youlong, Shenzhen, Guangdong 518129 (CN); QIN, Yi, Shenzhen, Guangdong 518129 (CN)
(74) Representative: Epping - Hermann - Fischer
(86) International application number: PCT/CN2023/095210
(87) International publication number: WO 2024/032077

(57) **Abstract**

This application provides an uplink transmission method and a communication apparatus, and relates to the communication field. **In** the method, a terminal sends uplink data to a network device, and starts a first timer; and starts a second timer at a moment t1 when a moment t2 at which the first timer expires is in inactive time and a time interval T between the moment at which the first timer expires and a start moment of next active time is less than a remaining scheduling time period of the uplink data, and monitors a retransmission grant for the uplink data before the second timer expires or is stopped, where duration of the first timer is shortest duration before the retransmission grant for the uplink data is expected to be received, and t1=t2+T. **In** the solutions, when the uplink data may be delayed to the next active time for retransmission, the second timer is no longer started after the uplink data is transmitted this time, but is started in the next active time, so that power consumption can be reduced.

## Description

This application claims priority to Chinese Patent Application No. 202210964540.6, filed with the China National Intellectual Property Administration on August 10, 2022 and entitled "UPLINK TRANSMISSION METHOD AND COMMUNICATION APPARATUS", which is incorporated herein by reference in its entirety.

### TECHNICAL FIELD

This application relates to the communication field, and in particular, to an uplink transmission method and a communication apparatus.

### BACKGROUND

Extended reality (extended reality, XR) is a multimedia service with high real-time performance and a high data capacity requirement. The XR includes virtual reality (virtual reality, VR), augmented reality (augmented reality, AR), and cloud gaming (cloud gaming, CG). As XR devices (such as VR glasses and AR glasses) become lightweight, power consumption of power-consuming devices needs to be considered more while user experience is ensured.

A discontinuous reception (discontinuous reception, DRX) technology is introduced into the 5th generation (5th generation, 5G) mobile communication technology new radio (new radio, NR) standard for power saving (power saving). A basic mechanism of the DRX is to configure a DRX cycle (DRX cycle) for a terminal. In an on duration period, the terminal normally monitors a physical downlink control channel (physical downlink control channel, PDCCH). In another period, the terminal has an opportunity to enter a sleep state and does not receive a PDCCH, to reduce power consumption.

Two timers, namely, drx-HARQ-RTT-TimerUL and drx-Retransmission-TimerUL, are defined in the DRX for uplink data retransmission processing. Specifically, the terminal starts the drx-HARQ-RTT-TimerUL timer after sending a physical uplink shared channel (physical uplink shared channel, PUSCH), and starts the drx-Retransmission-TimerUL timer after the drx-HARQ-RTT-TimerUL timer expires. The terminal needs to monitor a PDCCH during a period of the drx-Retransmission-TimerUL timer. In this case, if the terminal is in a sleep state during the period of the drx-Retransmission-TimerUL timer, the terminal needs to be woken up to monitor the PDCCH. This increases power consumption of the terminal.

### SUMMARY

This application provides an uplink transmission method and a communication apparatus, to reduce power consumption of a terminal.

According to a first aspect, an uplink transmission method is provided. The method may be performed by a terminal, may be performed by a component (for example, a processor, a chip, or a chip system) of a terminal, or may be implemented by a logical module or software that can implement all or a part of functions of a terminal.

The method includes: sending uplink data to a network device, and starting a first timer; and starting a second timer at a moment t1 when a first condition is met, and monitoring a retransmission grant for the uplink data before the second timer expires or is stopped. Duration of the first timer is shortest duration before the retransmission grant for the uplink data is expected to be received. t1=t2+T, t2 represents a moment at which the first timer expires, and T represents a time interval between the moment at which the first timer expires and a start moment of next active time. The first condition is that the moment at which the first timer expires is in inactive time and the time interval is less than a remaining scheduling time period of the uplink data.

The active time is a time period in which a PDCCH needs to be monitored, and the inactive time is a time period in which the PDCCH does not need to be monitored.

For example, the first timer may be started at an end moment of a last symbol of the uplink data.

It should be understood that the remaining scheduling time period of the uplink data is a remaining scheduling time period that is of the uplink data and that starts from the moment at which the first timer expires.

According to the uplink transmission method provided in this application, when the moment at which the first timer (for example, drx-HARQ-RTT-TimerUL) expires is in the inactive time, and the time interval between the moment at which the first timer expires and the start moment of the next active time is less than the remaining scheduling time period of the uplink data, the second timer (for example, drx-RetransmissionTimerUL) may not be started when the first timer expires, but is started in the next active time. Because the terminal does not need to monitor the retransmission grant for the uplink data by entering an active state when the first timer expires, the terminal originally needs to monitor the PDCCH in the next active time, and starting the second timer in the next active time does not cause additional power consumption, the method provided in this application can reduce power consumption.

In some possible implementations, the method may further include: starting, when a second condition is met, the second timer at the moment at which the first timer expires, and monitoring the retransmission grant for the uplink data before the second timer expires or is stopped. The second condition is that the moment at which the first timer expires is in active time, or that the moment at which the first timer expires is in the inactive time and the time interval is greater than or equal to the remaining scheduling time period of the uplink data.

According to this solution, when the moment at which the first timer expires is in the inactive time, and the time interval between the moment at which the first timer expires and the start moment of the next active time is greater than or equal to the remaining scheduling time period of the uplink data, or when the moment at which the first timer expires is in the active time, the second timer is started at the moment at which the first timer expires, so that retransmission scheduling can be performed for the uplink data in a timely manner, to avoid invalidity of the uplink data caused by untimely scheduling.

In some possible implementations, the method may further include: receiving configuration information from the network device. Further, it may be determined, based on the configuration information, to start the second timer at the moment t1 when the first condition is met.

In some possible implementations, the method may further include: receiving configuration information from the network device. Further, it is determined, based on the configuration information, to start, when the second condition is met, the second timer at the moment at which the first timer expires.

In an example, the configuration information may be carried in physical layer signaling or higher layer signaling. For example, the physical layer signaling may be downlink control information (downlink control information, DCI). For example, the higher layer signaling may be a medium access control control element (medium access control control element, MAC CE) or radio resource control (radio resource control, RRC) signaling.

In another example, the configuration information may be jointly determined by using physical layer signaling and higher layer signaling. For example, a candidate set may be configured by using a MAC CE or RRC signaling, and DCI may indicate one piece of candidate content in the candidate set.

According to the foregoing solution, the network device may flexibly configure, for the terminal based on an actual requirement, a trigger mode for starting the second timer, to better adapt to requirements in different scenarios.

According to a second aspect, an uplink transmission method is provided. The method may be performed by a network, may be performed by a component (for example, a processor, a chip, or a chip system) of a network, or may be implemented by a logical module or software that can implement all or a part of functions of a network.

The method includes: receiving uplink data from a terminal, and starting a first timer; starting a second timer at a moment t1 when a first condition is met, and sending a retransmission grant for the uplink data to the terminal before the second timer expires or is stopped; and starting, when a second condition is met, the second timer at a moment at which the first timer expires, and sending the retransmission grant for the uplink data to the terminal before the second timer expires or is stopped.

Duration of the first timer is shortest duration before the terminal expects to receive the retransmission grant for the uplink data. t1=t2+T, t2 represents the moment at which the first timer expires, and T represents a time interval between the moment at which the first timer expires and a start moment of next active time.

The first condition is that the moment at which the first timer expires is in inactive time and the time interval is less than a remaining scheduling time period of the uplink data. The second condition is that the moment at which the first timer expires is in active time, or that the moment at which the first timer expires is in the inactive time and the time interval is greater than or equal to the remaining scheduling time period of the uplink data.

The active time is a time period in which a PDCCH needs to be monitored, and the inactive time is a time period in which the PDCCH does not need to be monitored.

For example, the first timer may be started at an end moment of a last symbol of the uplink data.

It should be understood that the remaining scheduling time period of the uplink data is a remaining scheduling time period that is of the uplink data and that starts from the moment at which the first timer expires.

According to the uplink transmission method provided in this application, when the moment at which the first timer expires is in the inactive time, and the time interval between the moment at which the first timer expires and the start moment of the next active time is less than the remaining scheduling time period of the uplink data, the second timer may not be started when the first timer expires, but is started in the next active time. Because the terminal does not need to monitor the retransmission grant for the uplink data by entering an active state when the first timer expires, the terminal originally needs to monitor the PDCCH in the next active time, and starting the second timer in the next active time does not cause additional power consumption, the method provided in this application can reduce power consumption. In addition, when the moment at which the first timer expires is in the inactive time, and the time interval between the moment at which the first timer expires and the start moment of the next active time is greater than or equal to the remaining scheduling time period of the uplink data, or when the moment at which the first timer expires is in the active time, the second timer is started at the moment at which the first timer expires, so that retransmission scheduling can be performed for the uplink data in a timely manner, to avoid invalidity of the uplink data caused by untimely scheduling.

In some possible implementations, before the receiving uplink data from a terminal, the method may further include: sending first uplink grant information to the terminal when the first condition is met; and sending second uplink grant information to the terminal when the second condition is met. Both the first uplink grant information and the second uplink grant information are for scheduling the uplink data.

In an example, the first uplink grant information indicates a first modulation and coding scheme (modulation and coding scheme, MCS), and the second uplink grant information indicates a second MCS. A modulation order corresponding to the first MCS is greater than a modulation order corresponding to the second MCS, and/or a code rate corresponding to the first MCS is greater than a code rate corresponding to the second MCS.

In another example, the first uplink grant information indicates a first transmission resource, the second uplink grant information indicates a second transmission resource, and a quantity of first transmission resources is less than a quantity of second transmission resources.

In still another example, the first uplink grant information indicates not to perform repeated transmission on the uplink data during initial transmission, and the second uplink grant information indicates to perform repeated transmission on the uplink data during the initial transmission.

According to this solution, on a premise that the moment at which the first timer expires is in the inactive time, it is determined whether a distance between the moment at which the first timer expires and the start moment of the next active time is within a range of the remaining scheduling time period, so that different grant information may be configured to dynamically adjust uplink transmission reliability, to better match a service, and improve a service capacity. For example, when the distance between the moment at which the first timer expires and the start moment of the next active time is not within the range of the remaining scheduling time period, an appropriate parameter is configured to improve the uplink transmission reliability, so that retransmission can be avoided as much as possible, to ensure that XR data is correctly communicated before becoming invalid, and improve user experience.

In some possible implementations, the method may further include: sending configuration information to the terminal. The configuration information indicates the terminal to start the second timer at the moment t1 when the first condition is met, and start, when the second condition is met, the second timer at the moment at which the first timer expires.

According to the foregoing solution, a network device may flexibly configure, for the terminal based on an actual requirement, a trigger mode for starting the second timer, to better adapt to requirements in different scenarios.

According to a third aspect, an uplink transmission method is provided. The method may be performed by a network, may be performed by a component (for example, a processor, a chip, or a chip system) of a network, or may be implemented by a logical module or software that can implement all or a part of functions of a network.

The method includes: sending first uplink grant information to a terminal when a first condition is met; sending second uplink grant information to the terminal when a second condition is met; and receiving uplink data from the terminal, and starting a first timer.

Duration of the first timer is shortest duration before the terminal expects to receive a retransmission grant for the uplink data. Both the first uplink grant information and the second uplink grant information are for scheduling the uplink data. The first uplink grant information indicates a first MCS, and the second uplink grant information indicates a second MCS. A modulation order corresponding to the first MCS is greater than a modulation order corresponding to the second MCS, and/or a code rate corresponding to the first MCS is greater than a code rate corresponding to the second MCS.

The first condition is that a moment at which the first timer expires is in inactive time, and a time interval is less than a time interval between the moment at which the first timer expires and a start moment of next active time. The second condition is that the moment at which the first timer expires is in active time, or that the moment at which the first timer expires is in the inactive time, and the time interval is greater than or equal to a remaining scheduling time period of the uplink data.

According to the uplink transmission method provided in this application, on a premise that the moment at which the first timer expires is in the inactive time, it is determined whether a distance between the moment at which the first timer expires and the start moment of the next active time is within a range of the remaining scheduling time period, so that uplink transmission reliability can be dynamically adjusted, to better match a service, and improve a service capacity. For example, when the distance between the moment at which the first timer expires and the start moment of the next active time is not within the range of the remaining scheduling time period, an appropriate parameter is configured to improve the uplink transmission reliability, so that retransmission can be avoided as much as possible, to ensure that XR data is correctly communicated before becoming invalid, and improve user experience.

In some possible implementations, the first uplink grant information further indicates a first transmission resource, the second uplink grant information further indicates a second transmission resource, and a quantity of first transmission resources is less than a quantity of second transmission resources.

According to this solution, transmission resources of different sizes are configured in different scenarios, so that uplink transmission reliability can be dynamically adjusted.

In some possible implementations, the first uplink grant information further indicates not to perform repeated transmission on the uplink data during initial transmission, and the second uplink grant information indicates to perform repeated transmission on the uplink data during the initial transmission.

According to this solution, whether the repeated transmission is needed is configured in different scenarios, so that uplink transmission reliability can be dynamically adjusted.

In some possible implementations, the method may further include: starting a second timer at a moment t1 when the first condition is met, and sending the retransmission grant for the uplink data to the terminal before the second timer expires or is stopped; and starting, when the second condition is met, the second timer at the moment at which the first timer expires, and sending the retransmission grant for the uplink data to the terminal before the second timer expires or is stopped. t1=t2+T, t2 represents the moment at which the first timer expires, and T represents the time interval.

According to this solution, when the moment at which the first timer expires is in the inactive time, and the time interval between the moment at which the first timer expires and the start moment of the next active time is less than the remaining scheduling time period of the uplink data, the second timer may not be started when the first timer expires, but is started in the next active time. Because the terminal does not need to monitor the retransmission grant for the uplink data by entering an active state when the first timer expires, the terminal originally needs to monitor a PDCCH in the next active time, and starting the second timer in the next active time does not cause additional power consumption, the method provided in this application can reduce power consumption.

In some possible implementations, the method may further include: sending configuration information to the terminal. The configuration information indicates the terminal to start the second timer at the moment t1 when the first condition is met, and start, when the second condition is met, the second timer at the moment at which the first timer expires.

According to the foregoing solution, a network device may flexibly configure, for the terminal based on an actual requirement, a trigger mode for starting the second timer, to better adapt to requirements in different scenarios.

According to a fourth aspect, an uplink transmission method is provided. The method may be performed by a terminal, may be performed by a component (for example, a processor, a chip, or a chip system) of a terminal, or may be implemented by a logical module or software that can implement all or a part of functions of a terminal.

The method includes: sending uplink data to a network device; and monitoring, when a time interval between a moment at which the sending of the uplink data is completed and a start moment of next active time is less than a remaining scheduling time period of the uplink data, a retransmission grant for the uplink data at the start moment of the next active time until the retransmission grant for the uplink data is obtained through monitoring or until the next active time ends.

The active time is a time period in which a PDCCH needs to be monitored, and the inactive time is a time period in which the PDCCH does not need to be monitored.

It should be understood that the remaining scheduling time period of the uplink data is a remaining scheduling time period that is of the uplink data and that starts from the moment at which the sending of the uplink data is completed.

For example, the moment at which the sending of the uplink data is completed may be an end moment of a last symbol of the uplink data.

According to the uplink transmission method provided in this application, when the time interval between the moment at which the terminal completes the sending of the uplink data and the start moment of the next active time is less than the remaining scheduling time period of the uplink data, the retransmission grant for the uplink data may be monitored in the next active time, so that neither a first timer (for example, drx-HARQ-RTT-TimerUL) nor a second timer (for example, drx-RetransmissionTimerUL) needs to be started, and the retransmission grant for the uplink data does not need to be monitored before the second timer expires. This can reduce power consumption of the terminal.

In some possible implementations, the method may further include: starting, when the time interval between the moment at which the sending of the uplink data is completed and the start moment of the next active time is greater than or equal to the remaining scheduling time period of the uplink data, a first timer at the moment at which the sending of the uplink data is completed, starting a second timer at a moment at which the first timer expires, and monitoring the retransmission grant for the uplink data before the second timer expires or is stopped, where duration of the first timer is shortest duration before the retransmission grant for the uplink data is expected to be received.

According to this solution, when the time interval between the moment at which the terminal completes the sending of the uplink data and the start moment of the next active time is greater than or equal to the remaining scheduling time period of the uplink data, the second timer is started at the moment at which the first timer expires, so that retransmission scheduling can be performed for the uplink data in a timely manner, to avoid invalidity of the uplink data caused by untimely scheduling.

In some possible implementations, the method may further include: receiving configuration information from the network device. Further, it may be determined, based on the configuration information, to monitor, when the time interval is less than the remaining scheduling time period, the retransmission grant for the uplink data at the start moment of the next active time until the retransmission grant for the uplink data is obtained through monitoring or until the next active time ends.

In some possible implementations, the method may further include: receiving configuration information from the network device. Further, it is determined, based on the configuration information, to start, when the time interval is greater than or equal to the remaining scheduling time period, the first timer at the moment at which the sending of the uplink data is completed.

In an example, the configuration information may be carried in physical layer signaling or higher layer signaling. For example, the physical layer signaling may be DCI. For example, the higher layer signaling may be a MAC CE or RRC signaling.

In another example, the configuration information may be jointly determined by using physical layer signaling and higher layer signaling. For example, a candidate set may be configured by using a MAC CE or RRC signaling, and DCI may indicate one piece of candidate content in the candidate set.

According to this solution, the network device may flexibly configure, for the terminal based on an actual requirement, a trigger mode for starting the first timer and/or the second timer, to better adapt to requirements in different scenarios.

According to a fifth aspect, an uplink transmission method is provided. The method may be performed by a network, may be performed by a component (for example, a processor, a chip, or a chip system) of a network, or may be implemented by a logical module or software that can implement all or a part of functions of a network.

The method includes: receiving uplink data from a terminal; when a time interval between a moment at which the uplink data is received and a start moment of next active time is less than a remaining scheduling time period of the uplink data, and the uplink data is not successfully received, sending a retransmission grant for the uplink data to the terminal before the next active time ends; and when the time interval between the moment at which the uplink data is received and the start moment of the next active time is greater than or equal to the remaining scheduling time period of the uplink data, and the uplink data is not successfully received, starting a first timer at the moment at which the uplink data is received, starting a second timer at a moment at which the first timer expires, and sending the retransmission grant for the uplink data to the terminal before the second timer expires or is stopped, where duration of the first timer is shortest duration before the terminal expects to receive the retransmission grant for the uplink data.

It should be understood that the moment at which a network device receives the uplink data is the same as a moment at which the terminal completes sending of the uplink data.

According to the uplink transmission method provided in this application, when the time interval between the moment at which the terminal completes the sending of the uplink data and the start moment of the next active time is less than the remaining scheduling time period of the uplink data, the retransmission grant for the uplink data may be monitored in the next active time, so that neither the first timer (for example, drx-HARQ-RTT-TimerUL) nor the second timer (for example, drx-RetransmissionTimerUL) needs to be started, and the retransmission grant for the uplink data does not need to be monitored before the second timer expires. This can reduce power consumption of the terminal. In addition, when the time interval between the moment at which the terminal completes the sending of the uplink data and the start moment of the next active time is greater than or equal to the remaining scheduling time period of the uplink data, the second timer is started at the moment at which the first timer expires, so that retransmission scheduling can be performed for the uplink data in a timely manner, to avoid invalidity of the uplink data caused by untimely scheduling.

In some possible implementations, before the receiving uplink data from a terminal, the method may further include: sending first uplink grant information to the terminal when the time interval is less than the remaining scheduling time period; and sending second uplink grant information to the terminal when the time interval is greater than or equal to the remaining scheduling time period. Both the first uplink grant information and the second uplink grant information are for scheduling the uplink data.

In an example, the first uplink grant information indicates a first MCS, and the second uplink grant information indicates a second MCS. A modulation order corresponding to the first MCS is greater than a modulation order corresponding to the second MCS, and/or a code rate corresponding to the first MCS is greater than a code rate corresponding to the second MCS.

In another example, the first uplink grant information indicates a first transmission resource, the second uplink grant information indicates a second transmission resource, and a quantity of first transmission resources is less than a quantity of second transmission resources.

In still another example, the first uplink grant information indicates not to perform repeated transmission on the uplink data during initial transmission, and the second uplink grant information indicates to perform repeated transmission on the uplink data during the initial transmission.

According to this solution, the network device determines, at the moment at which the uplink data is received, whether the time interval between the moment and the start moment of the next active time is within a range of the remaining scheduling time period, so that uplink transmission reliability can be dynamically adjusted, to better match a service, and improve a service capacity. For example, when a distance between the moment at which the network device receives the uplink data and the start moment of the next active time is not within the range of the remaining scheduling time period, an appropriate parameter is configured to improve the uplink transmission reliability, so that retransmission can be avoided as much as possible, to ensure that XR data is correctly communicated before becoming invalid, and improve user experience.

In some possible implementations, the method may further include: sending configuration information to the terminal. The configuration information indicates the terminal to monitor, when the time interval is less than the remaining scheduling time period, the retransmission grant for the uplink data at the start moment of the next active time until the retransmission grant for the uplink data is obtained through monitoring or until the next active time ends, and start, when the time interval is greater than or equal to the remaining scheduling time period, the first timer at the moment at which the uplink data is received.

According to this solution, the network device may flexibly configure, for the terminal based on an actual requirement, a trigger mode for starting the first timer and/or the second timer, to better adapt to requirements in different scenarios.

According to a sixth aspect, an uplink transmission method is provided. The method may be performed by a network, may be performed by a component (for example, a processor, a chip, or a chip system) of a network, or may be implemented by a logical module or software that can implement all or a part of functions of a network.

The method includes: sending first uplink grant information to a terminal when a time interval between a moment at which uplink data is received and a start moment of next active time is less than a remaining scheduling time period of the uplink data; sending second uplink grant information to the terminal when the time interval is greater than or equal to the remaining scheduling time period; and receiving the uplink data from the terminal.

Both the first uplink grant information and the second uplink grant information are for scheduling the uplink data. The first uplink grant information indicates a first MCS, and the second uplink grant information indicates a second MCS. A modulation order corresponding to the first MCS is greater than a modulation order corresponding to the second MCS, and/or a code rate corresponding to the first MCS is greater than a code rate corresponding to the second MCS.

It should be understood that the moment at which a network device receives the uplink data is the same as a moment at which the terminal completes sending of the uplink data.

According to the uplink transmission method provided in this application, the network device determines, at the moment at which the uplink data is received, whether the time interval between the moment and the start moment of the next active time is within a range of the remaining scheduling time period, so that uplink transmission reliability can be dynamically adjusted, to better match a service, and improve a service capacity. For example, when a distance between the moment at which the network device receives the uplink data and the start moment of the next active time is not within the range of the remaining scheduling time period, an appropriate parameter is configured to improve the uplink transmission reliability, so that retransmission can be avoided as much as possible, to ensure that XR data is correctly communicated before becoming invalid, and improve user experience.

In some possible implementations, the first uplink grant information further indicates a first transmission resource, the second uplink grant information further indicates a second transmission resource, and a quantity of first transmission resources is less than a quantity of second transmission resources.

According to this solution, transmission resources of different sizes are configured in different scenarios, so that uplink transmission reliability can be dynamically adjusted.

In some possible implementations, the first uplink grant information further indicates not to perform repeated transmission on the uplink data during initial transmission, and the second uplink grant information indicates to perform repeated transmission on the uplink data during the initial transmission.

According to this solution, whether the repeated transmission is needed is configured in different scenarios, so that uplink transmission reliability can be dynamically adjusted.

In some possible implementations, the method may further include: when the time interval is less than the remaining scheduling time period, and the uplink data is not successfully received, sending a retransmission grant for the uplink data to the terminal in the next active time; and when the time interval is greater than or equal to the remaining scheduling time period, and the uplink data is not successfully received, starting a first timer at the moment at which the uplink data is received, starting a second timer at a moment at which the first timer expires, and sending the retransmission grant for the uplink data to the terminal before the second timer expires or is stopped, where duration of the first timer is shortest duration before the terminal expects to receive the retransmission grant for the uplink data.

According to this solution, when the time interval between the moment at which the terminal completes the sending of the uplink data and the start moment of the next active time is less than the remaining scheduling time period of the uplink data, the retransmission grant for the uplink data may be monitored in the next active time, so that neither the first timer (for example, drx-HARQ-RTT-TimerUL) nor the second timer (for example, drx-RetransmissionTimerUL) needs to be started, and the retransmission grant for the uplink data does not need to be monitored before the second timer expires. This can reduce power consumption of the terminal. In addition, when the time interval between the moment at which the terminal completes the sending of the uplink data and the start moment of the next active time is greater than or equal to the remaining scheduling time period of the uplink data, the second timer is started at the moment at which the first timer expires, so that retransmission scheduling can be performed for the uplink data in a timely manner, to avoid invalidity of the uplink data caused by untimely scheduling.

In some possible implementations, before the sending a retransmission grant for the uplink data to the terminal, the method may further include: sending configuration information to the terminal. The configuration information indicates the terminal to monitor, when the time interval is less than the remaining scheduling time period, the retransmission grant for the uplink data at the start moment of the next active time until the retransmission grant for the uplink data is obtained through monitoring or until the next active time ends, and start, when the time interval is greater than or equal to the remaining scheduling time period, the first timer at the moment at which the uplink data is received.

According to this solution, the network device may flexibly configure, for the terminal based on an actual requirement, a trigger mode for starting the first timer and/or the second timer, to better adapt to requirements in different scenarios.

According to a seventh aspect, a communication apparatus is provided, including a module or a unit configured to perform the method according to any one of the first aspect or the possible implementations of the first aspect, or a module or a unit configured to perform the method according to any one of the fourth aspect or the possible implementations of the fourth aspect.

According to an eighth aspect, a communication apparatus is provided, including a module or a unit configured to perform the method according to any one of the second aspect or the possible implementations of the second aspect, a module or a unit configured to perform the method according to any one of the third aspect or the possible implementations of the third aspect, a module or a unit configured to perform the method according to any one of the fifth aspect or the possible implementations of the fifth aspect, or a module or a unit configured to perform the method according to any one of the sixth aspect or the possible implementations of the sixth aspect.

According to a ninth aspect, a communication apparatus is provided, including a processor, where the processor is coupled to a memory, the memory is configured to store a computer program or instructions, and the processor is configured to execute the computer program or the instructions stored in the memory, to implement the method according to any one of the first aspect or the possible implementations of the first aspect or the method according to any one of the fourth aspect or the possible implementations of the fourth aspect.

In a possible implementation, the apparatus further includes the memory coupled to the processor.

In a possible implementation, there are one or more processors and/or one or more memories.

In a possible implementation, the memory and the processor may be integrated together, or the memory and the processor are disposed separately.

In a possible implementation, the apparatus further includes a communication interface, and the processor is coupled to the communication interface.

In an implementation, the apparatus is a terminal. For example, the communication interface may be a transceiver or an input/output interface.

In another implementation, the apparatus is a chip in a terminal. For example, the communication interface may be an input/output interface.

According to a tenth aspect, a communication apparatus is provided, including a processor, where the processor is coupled to a memory, the memory is configured to store a computer program or instructions, and the processor is configured to execute the computer program or the instructions stored in the memory, to implement the method according to any one of the second aspect or the possible implementations of the second aspect, the method according to any one of the third aspect or the possible implementations of the third aspect, the method according to any one of the fifth aspect or the possible implementations of the fifth aspect, or the method according to any one of the sixth aspect or the possible implementations of the sixth aspect.

In a possible implementation, the apparatus further includes the memory coupled to the processor.

In a possible implementation, there are one or more processors and/or one or more memories.

In a possible implementation, the memory and the processor may be integrated together, or the memory and the processor are disposed separately.

In a possible implementation, the apparatus further includes a communication interface, and the processor is coupled to the communication interface.

In an implementation, the apparatus is a network device. For example, the communication interface may be a transceiver or an input/output interface.

In another implementation, the apparatus is a chip in a network device. For example, the communication interface may be an input/output interface.

According to an eleventh aspect, a processor is provided, including an input circuit, an output circuit, and a processing circuit. The processing circuit is configured to receive a signal by using the input circuit, and send a signal by using the output circuit, to enable the processor to perform the method according to any one of the foregoing aspects or the possible implementations of the aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, a receiver, a signal output by the output circuit may be output to, for example, a transmitter and sent by the transmitter, and the input circuit and the output circuit may be a same circuit, where the circuit is separately used as the input circuit and the output circuit at different moments. Specific implementations of the processor and various circuits are not limited in this application.

According to a twelfth aspect, a communication system is provided. The communication system includes the foregoing terminal and/or network device.

According to a thirteenth aspect, a computer program product is provided. The computer program product includes a computer program (which may also be referred to as code or instructions). When the computer program is run, a computer is enabled to perform the method according to any one of the foregoing aspects or the possible implementations of the aspects.

According to a fourteenth aspect, a computer-readable storage medium is provided. The computer-readable storage medium stores a computer program (which may also be referred to as code or instructions). When the computer program is run on a computer, the computer is enabled to perform the method according to any one of the foregoing aspects or the possible implementations of the aspects.

According to a fifteenth aspect, a chip is provided. The chip includes a processor, configured to invoke a computer program from a memory and run the computer program, to enable a communication apparatus on which the chip is installed to perform the method according to any one of the foregoing aspects or the possible implementations of the aspects.

### BRIEF DESCRIPTION OF DRAWINGS

FIG. 1 is a diagram of an example of a communication system according to an embodiment of this application;
FIG. 2 is a diagram of arrival of an XR video frame according to an embodiment of this application;
FIG. 3 is a diagram of a DRX cycle according to an embodiment of this application;
FIG. 4 is a diagram of a DRX cycle according to an embodiment of this application;
FIG. 5 is a diagram of downlink retransmission processing according to an embodiment of this application;
FIG. 6 is a diagram of uplink retransmission processing according to an embodiment of this application;
FIG. 7 is a schematic flowchart of an uplink transmission method according to an embodiment of this application;
FIG. 8 is a timing diagram of an example of data transmission according to an embodiment of this application;
FIG. 9 is a timing diagram of another example of data transmission according to an embodiment of this application;
FIG. 10 is a timing diagram of still another example of data transmission according to an embodiment of this application;
FIG. 11 is a schematic flowchart of an uplink transmission method according to an embodiment of this application;
FIG. 12 is a schematic flowchart of an uplink transmission method according to an embodiment of this application;
FIG. 13 is a schematic flowchart of an uplink transmission method according to an embodiment of this application;
FIG. 14 is a timing diagram of an example of data transmission according to an embodiment of this application;
FIG. 15 is a timing diagram of another example of data transmission according to an embodiment of this application;
FIG. 16 is a schematic flowchart of an uplink transmission method according to an embodiment of this application;
FIG. 17 is a block diagram of a communication apparatus according to an embodiment of this application;
FIG. 18 is a block diagram of another communication apparatus according to an embodiment of this application;
FIG. 19 is a diagram of a structure of a terminal according to an embodiment of this application; and
FIG. 20 is a diagram of a structure of a network device according to an embodiment of this application.

### DESCRIPTION OF EMBODIMENTS

The following describes technical solutions in embodiments of this application with reference to the accompanying drawings in embodiments of this application.

In the descriptions of this application, unless otherwise specified, "/" indicates that associated objects are in an "or" relationship. For example, A/B may represent A or B. The term "and/or" in this application describes only an association relationship between associated objects and represents that three relationships may exist. For example, A and/or B may represent the following three cases: Only A exists, both A and B exist, and only B exists. A and B each may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be understood that, in this application, descriptions similar to "in a case of..." "when...", "if...", and the like may be used interchangeably.

The technical solutions in embodiments of this application may be applied to various communication systems, for example, a long term evolution (long term evolution, LTE) system, a 5th generation (5th Generation, 5G) mobile communication system, a new radio (New Radio, NR) mobile communication system, and another mobile communication system that may appear in the future.

A terminal in embodiments of this application may be user equipment (user equipment, UE), a station (station), an access terminal, a subscriber unit, a subscriber station, a mobile station, a remote station, a remote terminal, a mobile device, a user terminal, a terminal, a wireless communication device, a user agent, or a user apparatus. The terminal may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function or another processing device connected to a wireless modem, a vehicle-mounted device, a wearable device, a terminal in a 5G network, a terminal in a future evolved public land mobile network (public land mobile network, PLMN), or the like. This is not limited in embodiments of this application.

A network device in embodiments of this application may be a device configured to communicate with the terminal. For example, the network device may be a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, or an access point (access point, AP) in a Wi-Fi system. For another example, the network device may alternatively be a module or unit that completes a part of functions of a base station, for example, may be a central unit (central unit, CU) or a distributed unit (distributed unit, DU). For still another example, the network device may alternatively be a radio controller in a cloud radio access network (cloud radio access network, CRAN) scenario, a relay station, an access point, a vehicle-mounted device, a wearable device, or an access network device in another future evolved communication system. A specific technology and a specific device form that are used by the network device are not limited in this application.

In embodiments of this application, the terminal or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems, for example, a Linux operating system, a Unix operating system, an Android operating system, an iOS operating system, or a Windows operating system, that implement service processing through a process (process). The application layer includes applications such as a browser, an address book, word processing software, and instant messaging software. In addition, a specific structure of an execution body of a method provided in embodiments of this application is not particularly limited in embodiments of this application, provided that a program that records code for the method provided in embodiments of this application can be run to perform communication according to the method provided in embodiments of this application. For example, the execution body of the method provided in embodiments of this application may be the terminal or the network device, or may be a functional module that is in the terminal or the network device and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel and various other media that can store, contain, and/or carry instructions and/or data.

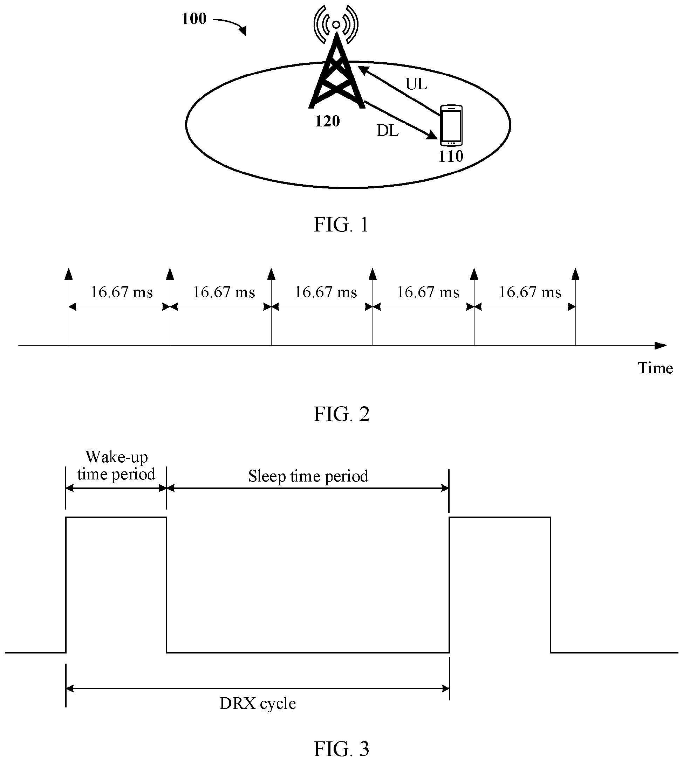

FIG. 1 is a block diagram of a communication system to which this application is applicable. As shown in FIG. 1, the communication system 100 may include at least one terminal, for example, a terminal 110 shown in FIG. 1. The communication system 100 may further include at least one network device, for example, a network device 120 shown in FIG. 1. A signal may be communicated between the terminal 110 and the network device 120. That the network device 120 sends a signal to the terminal 110 is referred to as downlink (downlink, DL) transmission (or downlink communication), and that the terminal 110 sends a signal to the network device 120 is referred to as uplink (uplink, UL) transmission (or uplink communication). The technical solutions provided in this application may be applied to the uplink transmission.

It should be understood that the communication system shown in FIG. 1 may further include more network nodes, for example, more terminals or network devices. The network nodes are not shown one by one in the figure in this embodiment of this application.

For an XR transmission service and a video transmission service, service models are usually periodically arrived based on frame rates. For example, FIG. 2 is a diagram of arrival of an XR video frame. For a video with a frame rate of 60 frames per second (frames per second, FPS), ideally, one picture frame arrives at an interval of 16.67 milliseconds. Generation and arrival of data packets of the XR transmission service and the video transmission service are not continuous. On a terminal side, from a perspective of delay, monitoring downlink control signaling of a network device in each slot is beneficial for receiving an uplink grant or downlink data, but brings power consumption to the terminal. To reduce the power consumption of the terminal, when there is no data transmission, PDCCH reception may be stopped (in this case, PDCCH blind detection is stopped) to reduce the power consumption, to increase battery use time. A discontinuous reception (discontinuous reception, DRX) technology introduced into the 5G new radio (new radio, NR) standard can implement a power saving (power saving) function.

A basic mechanism of the DRX is to configure a DRX cycle (DRX cycle) for a terminal. Refer to a DRX cycle shown in FIG. 3. Each DRX cycle includes a wake-up time period (On Duration) and a sleep time period (Opportunity for DRX). In the on duration period, a terminal monitors and receives a PDCCH. In the opportunity for DRX period, the terminal has an opportunity to enter a sleep state and does not receive the PDCCH, to reduce power consumption. The terminal in the sleep state does not receive the PDCCH only, but may receive data from other physical channels such as a physical downlink shared channel (physical downlink shared channel, PDSCH) and an acknowledgment (acknowledgment, ACK) signal. For example, in semi-persistent scheduling (semi-persistent scheduling, SPS), the terminal in the sleep state may receive a PDSCH sent in a periodically configured downlink subframe.

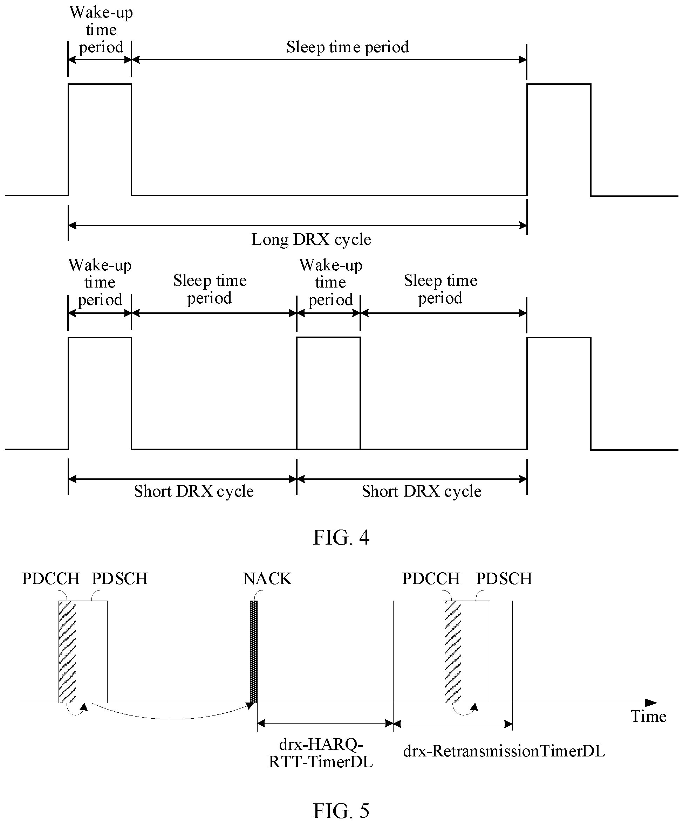

A balance between the power saving and the delay needs to be considered during selection of the DRX cycle. On the one hand, a longer DRX cycle is beneficial for prolonging the battery use time of the terminal. On the other hand, a shorter DRX cycle is beneficial to a faster response when there is new data transmission. To meet the foregoing requirements, two DRX cycles, namely, a short DRX cycle (short DRX-Cycle) and a long DRX cycle (long DRX-Cycle), may be configured for each terminal. For example, FIG. 4 shows an example of the short DRX cycle and the long DRX cycle. At any moment, the terminal can use only one configuration in the short DRX cycle and the long DRX cycle.

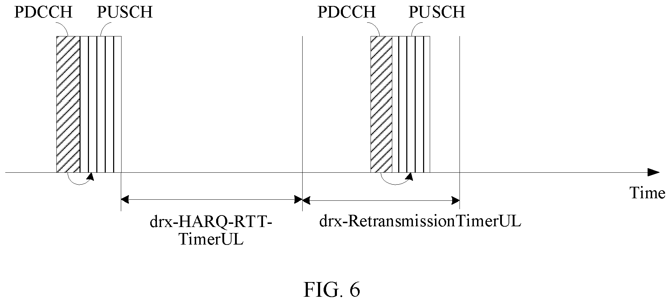

In the DRX, two parameters, namely, drx-RetransmissionTimerDL and drx-HARQ-RTT-TimerDL, are further configured for downlink data retransmission processing, and two parameters, namely, drx-RetransmissionTimerUL and drx-HARQ-RTT-TimerUL, are configured for uplink data retransmission processing. Each downlink process corresponds to one drx-RetransmissionTimerDL parameter and one drx-HARQ-RTT-TimerDL parameter, and each uplink process corresponds to one drx-RetransmissionTimerUL parameter and one drx-HARQ-RTT-TimerUL parameter. The following separately describes the several timers with reference to FIG. 5 and FIG. 6.

FIG. 5 is a diagram of an example of downlink retransmission processing. Refer to FIG. 5. A terminal receives a PDSCH based on a received PDCCH. If the terminal does not successfully receive the PDSCH, the terminal sends a negative acknowledgment (negative acknowledgement, NACK) for the PDSCH to a network device. In addition, the terminal starts drx-HARQ-RTT-TimerDL after sending the NACK. During running of drx-HARQ-RTT-TimerDL, the network device does not perform retransmission scheduling for the PDSCH, and the retransmission scheduling for the PDSCH is performed only after drx-HARQ-RTT-TimerDL expires. Therefore, during the running of drx-HARQ-RTT-TimerDL, the terminal enters an inactive state, and does not monitor the PDCCH. When drx-HARQ-RTT-TimerDL expires, the terminal starts drx-RetransmissionTimerDL, enters an active state, and starts to monitor a retransmission grant for the PDSCH from a network side. When the terminal obtains the retransmission grant for the PDSCH through monitoring, the terminal stops timing of drx-RetransmissionTimerDL, and receives a retransmitted PDSCH based on the retransmission grant for the PDSCH.

FIG. 6 is a diagram of an example of uplink retransmission processing. Refer to FIG. 6. A terminal sends a PUSCH based on a received PDCCH. Regardless of whether a network device successfully receives the PUSCH, the terminal starts drx-HARQ-RTT-TimerUL after completing the sending of the PUSCH. During running of drx-HARQ-RTT-TimerUL, the network device does not perform retransmission scheduling for the PUSCH, and the retransmission scheduling for the PUSCH is performed only after drx-HARQ-RTT-TimerUL expires. Therefore, during the running of drx-HARQ-RTT-TimerUL, the terminal enters an inactive state, and does not monitor the PDCCH. When drx-HARQ-RTT-TimerUL expires, the terminal starts drx-RetransmissionTimerUL, enters an active state, and starts to monitor a retransmission grant for the PUSCH from a network side. When the terminal obtains the retransmission grant for the PUSCH through monitoring, the terminal stops timing of drx-RetransmissionTimerUL, and retransmits the PUSCH based on the retransmission grant for the PUSCH.

XR services mainly include VR, AR, and CG. During uplink transmission, for the VR and the CG, pose (pose) or control (control) information needs to be uploaded. Generally, the pose or control information is periodically uploaded, and a periodicity is usually 4 ms. For the AR service, in addition to pose and control information, a video frame also needs to be uploaded. Common video frame rates are 30 FPS, 60 FPS, 90 FPS, 120 FPS, and the like, and corresponding periodicities are 33.33 ms, 16.67 ms, 11.11 ms, 8.33 ms, and the like. Transmission of an XR video frame needs to be performed within a specified delay. If the transmission is performed outside the specified delay, the XR video frame cannot be rendered on a terminal or server side. A packet delay budget of uplink AR transmission is usually 30 ms, and a packet delay budget of the pose or control information is usually 10 ms.

The DRX is configured based on a downlink traffic pattern (traffic pattern) (for example, a periodicity is 16.67 ms). Uplink pose or control data is more frequent (for example, a periodicity is 4 ms). If the terminal needs to monitor, after each time of PUSCH transmission, the PDCCH during a period of drx-Retransmission-TimerUL started when drx-HARQ-RTT-TimerUL expires, large power consumption is caused.

In view of this, this application provides an uplink transmission solution. When uplink data may be delayed to next active time for retransmission, drx-Retransmission-TimerUL is no longer started after the uplink data is transmitted this time, but is started in the next active time. Because a terminal does not need to start drx-Retransmission-TimerUL, when drx-HARQ-RTT-TimerUL expires, the terminal does not need to enter an active state to monitor a PDCCH. In addition, the terminal originally needs to monitor the PDCCH in the next active time, and starting drx-Retransmission-TimerUL in the next active time does not cause additional power consumption. Therefore, the solution provided in this application can reduce power consumption.

For the active time, inactive time, a first timer, and a second timer in this application, refer to the following descriptions.
1. Active time (DRX active time): In the active time, a terminal needs to monitor a PDCCH.
   For example, the active time may include an on duration period, a drx-RetransmissionTimerDL running period, and a drx-Retransmission-TimerUL running period.
2. Inactive time (DRX inactive time): In the inactive time, the terminal does not need to monitor the PDCCH.
   For example, the inactive time may include a drx-HARQ-RTT-TimerDL running period, a drx-HARQ-RTT-TimerUL running period, a drx-InactivityTimer running period, and another period in which the PDCCH does not need to be monitored. It should be understood that drx-InactivityTimer is not mentioned in this application, but reference may be made to a conventional technology.
3. First timer: may be drx-HARQ-RTT-TimerUL, or may be a timer having a same function as drx-HARQ-RTT-TimerUL.

Duration of the first timer is shortest duration before a retransmission grant for uplink data is expected to be received. To be specific, the terminal can receive the retransmission grant for the uplink data at the earliest after the first timer expires, in other words, a network device sends the retransmission grant for the uplink data at the earliest after the first timer expires. For example, if the first timer is drx-HARQ-RTT-TimerUL, the duration of the first timer is duration of drx-HARQ-RTT-TimerUL. The retransmission grant for the uplink data may be a PDCCH or DCI for scheduling retransmission of the uplink data.

A running period of the first timer is the inactive time, to be specific, during running of the first timer, the terminal does not need to monitor the PDCCH, and correspondingly, the network device does not send the PDCCH.

4. Second timer: may be drx-Retransmission-TimerUL, or may be a timer having a same function as drx-Retransmission-TimerUL.

The network device may send retransmission scheduling for the uplink data before the second timer expires. Correspondingly, the terminal may monitor the retransmission scheduling for the uplink data before the second timer expires. Once the terminal obtains the retransmission scheduling for the uplink data through monitoring, the second timer may stop timing.

5. Receiving of the uplink data by the network device: The receiving of the uplink data by the network device means that the network device attempts to receive the uplink data on a resource that is configured by the network device for the terminal and that is for sending the uplink data, but a receiving result may be that the network device obtains, through receiving, the uplink data sent by the terminal, or that the network device does not obtain, through receiving, the uplink data sent by the terminal. In addition, if the network device obtains, through receiving, the uplink data sent by the terminal, the network device further needs to demodulate or decode the uplink data. If the network device correctly demodulates or decodes the uplink data, it means that the network device correctly receives the uplink data. If the network device does not correctly demodulate or decode the uplink data, it means that the network device incorrectly receives the uplink data. If the network device does not obtain the uplink data through receiving, or the network device receives the uplink data incorrectly although the uplink data is obtained through receiving, the network device schedules retransmission of the uplink data.

It should be understood that, that the network device does not successfully receive the uplink data described in this specification includes two cases: The network device does not obtain the uplink data through receiving. The network device receives the uplink data incorrectly although the uplink data is obtained through receiving. That the network device successfully receives the uplink data means: The network device correctly receives the uplink data.

With reference to corresponding flowcharts, the following describes in detail the solutions provided in this application. It may be understood that, in the schematic flowcharts provided in this application, the method is mainly illustrated by using an example in which a network device and a terminal serve as execution bodies of the interaction illustration. However, the execution bodies of the interaction illustration are not limited in this application. For example, the network device in the schematic flowcharts may alternatively be a chip, a chip system, or a processor that supports the network device in implementing the method, or may be a logical module or software that can implement all or a part of functions of the network device. The terminal in the schematic flowcharts may alternatively be a chip, a chip system, or a processor that supports the terminal in implementing the method, or may be a logical module or software that can implement all or a part of functions of the terminal.

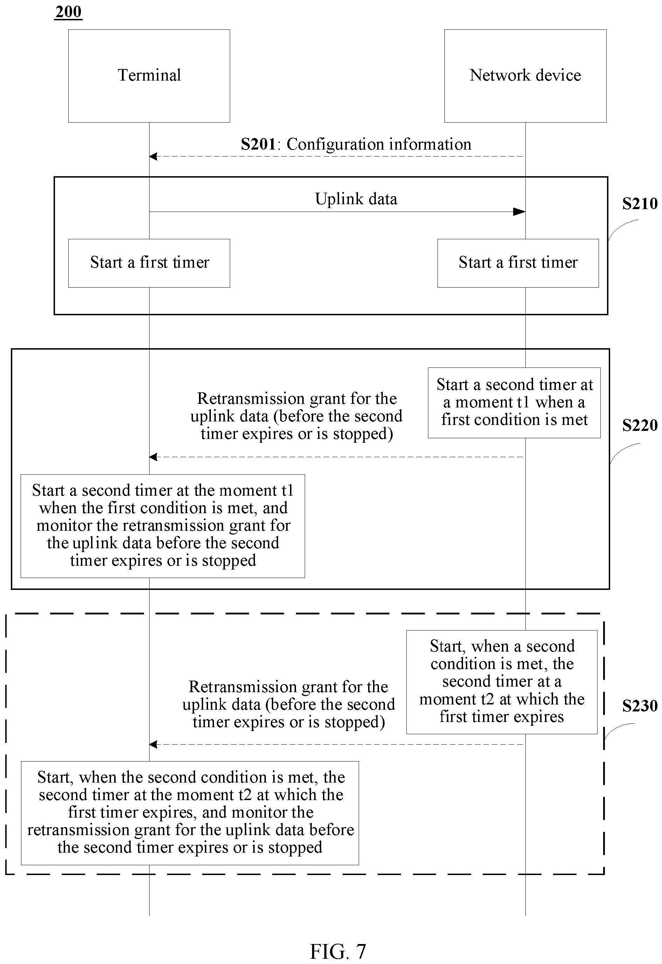

FIG. 7 is a schematic flowchart of an uplink transmission method according to this application. The method 200 may include S210 and S220.

S210: A terminal sends uplink data to a network device, and starts a first timer. Correspondingly, the network device receives the uplink data, and starts a first timer.

Specifically, the terminal sends the uplink data based on scheduling from the network device, and may start the first timer after sending the uplink data. Correspondingly, the network device receives the uplink data. In an example, the first timer is started if the network device does not successfully receive the uplink data. In another example, the first timer is started regardless of whether the network device successfully receives the uplink data.

The uplink data may be a PUSCH, or the uplink data is carried in a PUSCH.

For example, the first timer may be started after a last symbol of the uplink data is sent/received. For example, the first timer is drx-HARQ-RTT-TimerUL, and an occasion for starting the first timer is an occasion for starting drx-HARQ-RTT-TimerUL in a conventional technology.

It should be noted that retransmitted uplink data may be completely the same as the uplink data. Alternatively, retransmitted uplink data and the uplink data have same content, but may have different redundancy versions (redundancy versions, RVs) or other content that does not affect decoding of the uplink data.

S220: The terminal starts a second timer at a moment t1 when a first condition is met, and monitors a retransmission grant for the uplink data before the second timer expires or is stopped.

Correspondingly, the network device starts a second timer at the moment t1 when the first condition is met, and sends the retransmission grant for the uplink data to the terminal before the second timer expires or is stopped.

The first condition is that a moment t2 at which the first timer expires is in inactive time and a time interval T is less than a remaining scheduling time period of the uplink data. The time interval T is a time interval between the moment t2 at which the first timer expires and the start moment t1 of next active time, in other words, T=t1-t2, or t1=t2+T.

To be specific, if the moment t2 at which the first timer expires is in the inactive time, and the time interval T between the moment t2 at which the first timer expires and the start moment t1 of the next active time is less than the remaining scheduling time period T of the uplink data, the terminal may start the second timer at the start moment t1 of the next active time, and monitor the retransmission grant for the uplink data before the second timer expires or is stopped. Correspondingly, if the network device does not successfully receive the uplink data sent by the terminal in S210, the network device starts the second timer at the moment t1, and sends the retransmission grant for the uplink data to the terminal before the second timer expires or is stopped. If the network device successfully receives the uplink data sent by the terminal in S210, the network device may start the second timer, or may not start the second timer. However, regardless of whether the second timer is started, the network device does not need to schedule the terminal to retransmit the uplink data.

The next active time may be a time period in which a PDCCH needs to be monitored and that is after and closest to, in terms of time, the moment at which the first timer expires. For example, the next active time may be a running period of drx-RetransmissionTimerDL that is after and closest to, in terms of time, the moment at which the first timer expires. The next active time may alternatively be an on duration period that is after and closest to, in terms of time, the moment at which the first timer expires.

For example, the start moment of the next active time may be a start position of a 1^{st} symbol of the next active time.

The remaining scheduling time period of the uplink data is a remaining scheduling time period that is of the uplink data and that starts from the moment at which the first timer expires. The uplink data has a transmission delay requirement. If the uplink data is not scheduled in the remaining scheduling time period of the uplink data, the uplink data becomes invalid. In an example, a packet delay budget (packet delay budget, PDB) may represent the transmission delay requirement of the uplink data. For example, assuming that the PDB is 30 ms, the uplink data needs to be scheduled within 30 ms. If the uplink data is not scheduled within 30 ms, the uplink data becomes invalid.

A person skilled in the art may understand that, for a terminal side, the terminal may obtain the PDB (configured by the network device by using QoS rules) through a core network device, and may sense a waiting time period t that is needed after the uplink data arrives at a buffer (for example, an RLC buffer) and that ends at the moment at which the first timer expires. Therefore, the remaining scheduling time period may be calculated as PDB-t. For a network device side, in a manner, the network device may obtain the PDB (configured by using a QoS profile) through the core network device. The terminal reports, by using a scheduling request (scheduling request, SR), a buffer status report (buffer status report, BSR), a new medium access control (medium access control, MAC) control unit (control element, CE), or the like, the waiting delay t that has been consumed after the uplink data arrives at the buffer, and the remaining scheduling time period may be calculated by using PDB-t. In another manner, the terminal may report the remaining scheduling time period of the uplink data to the network device.

The monitoring a retransmission grant for the uplink data before the second timer expires or is stopped means: starting to monitor the retransmission grant for the uplink data when the second timer is started. If the retransmission grant for the uplink data is obtained through monitoring before the second timer expires, timing of the second timer is stopped after the retransmission grant for the uplink data is obtained through monitoring. If the retransmission grant for the uplink data has not been obtained through monitoring when the second timer expires, timing of the timer is stopped when the second timer expires.

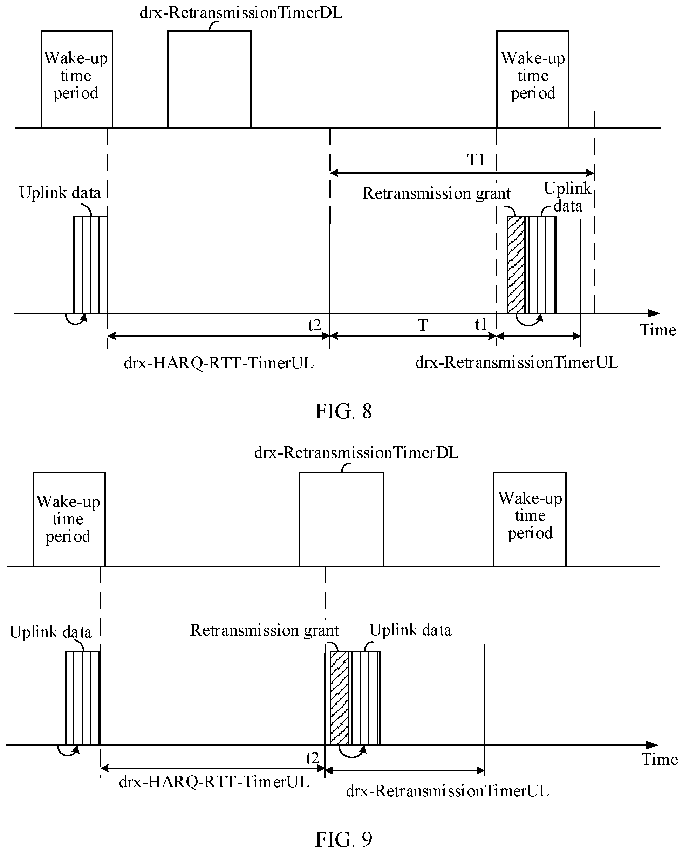

Using an example in which the first timer is drx-HARQ-RTT-TimerUL and the second timer is drx-RetransmissionTimerUL, the following describes S220 with reference to FIG. 8 that is a timing diagram of an example of data transmission.

Refer to FIG. 8. A time interval between a moment t2 at which drx-HARQ-RTT-TimerUL expires and a start moment t1 of next active time (namely, an on duration period) is T, a remaining scheduling time period of the uplink data is T1, and T<T1. In this case, even if the uplink data is retransmitted in the next active time, the uplink data does not become invalid if a transmission occasion is set appropriately, in other words, the uplink data may be delayed to the next active time for retransmission. In addition, because the terminal is in inactive time at the moment t2, to reduce power consumption, the terminal may not start drx-RetransmissionTimerUL at the moment t2, but start drx-RetransmissionTimerUL at the moment t1. During running of drx-RetransmissionTimerUL, the terminal monitors the retransmission grant for the uplink data. Moreover, once the terminal obtains the retransmission grant for the uplink data through monitoring, timing of drx-RetransmissionTimerUL is stopped. After obtaining the retransmission grant for the uplink data through monitoring, the terminal may retransmit the uplink data based on the retransmission grant.

In conclusion, according to the uplink transmission method provided in this application, when the moment at which the first timer expires is in the inactive time, and the time interval between the moment at which the first timer expires and the start moment of the next active time is less than the remaining scheduling time period of the uplink data, the second timer may not be started when the first timer expires, but is started in the next active time. Because the terminal does not need to monitor the retransmission grant for the uplink data by entering an active state when the first timer expires, the terminal originally needs to monitor the PDCCH in the next active time, and starting the second timer in the next active time does not cause additional power consumption, the method provided in this application can reduce the power consumption.

In some embodiments, the method 200 may further include the following step:
S230: Start, when a second condition is met, the second timer at the moment t2 at which the first timer expires, and monitor the retransmission grant for the uplink data before the second timer expires or is stopped. Correspondingly, the network device starts the second timer at the moment t2 at which the first timer expires, and sends the retransmission grant for the uplink data to the terminal before the second timer expires or is stopped.

The second condition is that the moment t2 at which the first timer expires is in active time, or that the moment t2 at which the first timer expires is in the inactive time and the time interval T is greater than (or greater than or equal to) the remaining scheduling time period T2 of the uplink data. It should be understood that, that the first condition is not met means that the second condition is met.

Specifically, if the moment t2 at which the first timer expires is in the inactive time, and the time interval T between the moment t2 at which the first timer expires and the start moment t1 of the next active time is greater than (or greater than or equal to) the remaining scheduling time period T of the uplink data, or if the moment t2 is in the active time, the terminal may start the second timer at the moment t2, and monitor the retransmission grant for the uplink data before the second timer expires or is stopped. Correspondingly, if the network device does not successfully receive the uplink data sent by the terminal in S210, the network device starts the second timer at the moment t2, and sends the retransmission grant for the uplink data to the terminal before the second timer expires or is stopped. If the network device successfully receives the uplink data sent by the terminal in S210, the network device may or may not start the second timer, but the network device does not need to schedule the terminal to retransmit the uplink data.

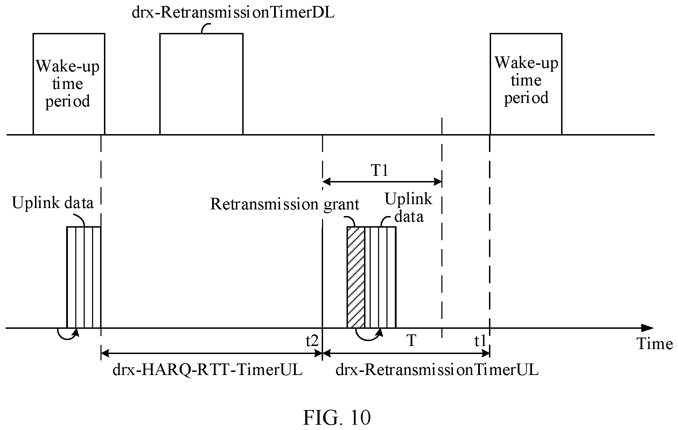

Using an example in which the first timer is drx-HARQ-RTT-TimerUL and the second timer is drx-RetransmissionTimerUL, the following describes S230 with reference to FIG. 9 and FIG. 10 that are timing diagrams of data transmission.

Refer to FIG. 9. The terminal is in a period of drx-RetransmissionTimerDL at a moment t2 at which drx-HARQ-RTT-TimerUL expires. Because the terminal is in active time at the moment t2, the terminal may start drx-RetransmissionTimerUL at the moment t2, and monitor the retransmission grant for the uplink data in drx-RetransmissionTimerUL. Moreover, once the terminal obtains the retransmission grant for the uplink data through monitoring, timing of drx-RetransmissionTimerUL is stopped. After obtaining the retransmission grant for the uplink data through monitoring, the terminal may retransmit the uplink data based on the retransmission grant.

Refer to FIG. 10. A time interval between a moment t2 at which drx-HARQ-RTT-TimerUL expires and a start moment t1 of next active time (namely, a start moment of drx-RetransmissionTimerDL) is T, a remaining scheduling time period of the uplink data is T1, and T>T1. In this case, if the uplink data is not retransmitted within T1, the uplink data becomes invalid. Therefore, regardless of whether the moment t2 is in active time, drx-RetransmissionTimerUL may be started at the moment t2. During running of drx-RetransmissionTimerUL, the terminal monitors the retransmission grant for the uplink data. Moreover, once the terminal obtains the retransmission grant for the uplink data through monitoring, timing of drx-RetransmissionTimerUL is stopped. After obtaining the retransmission grant for the uplink data through monitoring, the terminal may retransmit the uplink data based on the retransmission grant.

According to this solution, when the moment at which the first timer expires is in the inactive time, and the time interval between the moment at which the first timer expires and the start moment of the next active time is greater than (greater than or equal to) the remaining scheduling time period of the uplink data, or when the moment at which the first timer expires is in the active time, the second timer is started at the moment at which the first timer expires, so that retransmission scheduling can be performed for the uplink data in a timely manner, to avoid invalidity of the uplink data caused by untimely scheduling.

It should be noted that an occasion for determining, by the terminal or the network device, whether the first condition and/or the second condition is met is not limited in this application. For example, the terminal or the network device may determine, at the moment at which the first timer expires, whether the first condition is met. Alternatively, the terminal or the network device may determine, at another moment, for example, a start moment of the first timer, whether the first condition is met.

In some embodiments, before S210, the method may further include the following step:
S201: The network device sends configuration information to the terminal.

Correspondingly, the terminal receives the configuration information from the network device. After receiving the configuration information, the terminal performs S220 or S230 based on the configuration information after performing S210.

The configuration information may indicate the terminal to start the second timer at the moment t1 when the first condition is met, and start, when the second condition is met, the second timer at the moment t2 at which the first timer expires.

For example, the configuration information may indicate whether a trigger mode is condition-based trigger or direct trigger. The condition-based trigger means: After the first timer expires, it is determined whether the terminal meets the first condition. If the first condition is met, the second timer is started at the moment t1. If the first condition is not met, in other words, the second condition is met, the second timer is started at the moment t2 at which the first timer expires. In this way, the timer may directly indicate the condition-based trigger to indirectly indicate the terminal to start the second timer at the moment t1 when the first condition is met, and start, when the second condition is met, the second timer at the moment t2 at which the first timer expires. In addition, if the trigger mode is the direct trigger, there is no need to determine whether the first condition is met, and the second timer is directly started at the moment t2 at which the first timer expires.

In an example, the configuration information may be carried in physical layer signaling (for example, DCI) or higher layer signaling (for example, a MAC CE or RRC signaling).

For example, in a configured grant (configured grant, CG) type (Type) 1 mode, a field (for example, a retransmission trigger Retransmission-Trigger field) may be added to the RRC signaling. Alternatively, in a CG type 2 mode, a Retransmission-Trigger field may be added to the RRC signaling, or one-bit (bit) information may be added to the DCI, to indicate the trigger mode.

In another example, the configuration information may be jointly determined by using physical layer signaling and higher layer signaling. For example, a candidate trigger mode set may be configured by using a MAC CE or RRC signaling, and DCI may indicate the condition-based trigger in the candidate trigger mode set. Alternatively, a candidate trigger mode set is configured by using RRC signaling, and a MAC CE may indicate the condition-based trigger in the candidate trigger mode set. Alternatively, a set of candidate trigger mode sets is configured by using RRC signaling, a MAC CE indicates a candidate trigger mode set, and DCI may indicate the condition-based trigger in the candidate trigger mode set.

According to the foregoing solution, the network device may flexibly configure, for the terminal based on an actual requirement, a trigger mode for starting the second timer, to better adapt to requirements in different scenarios.

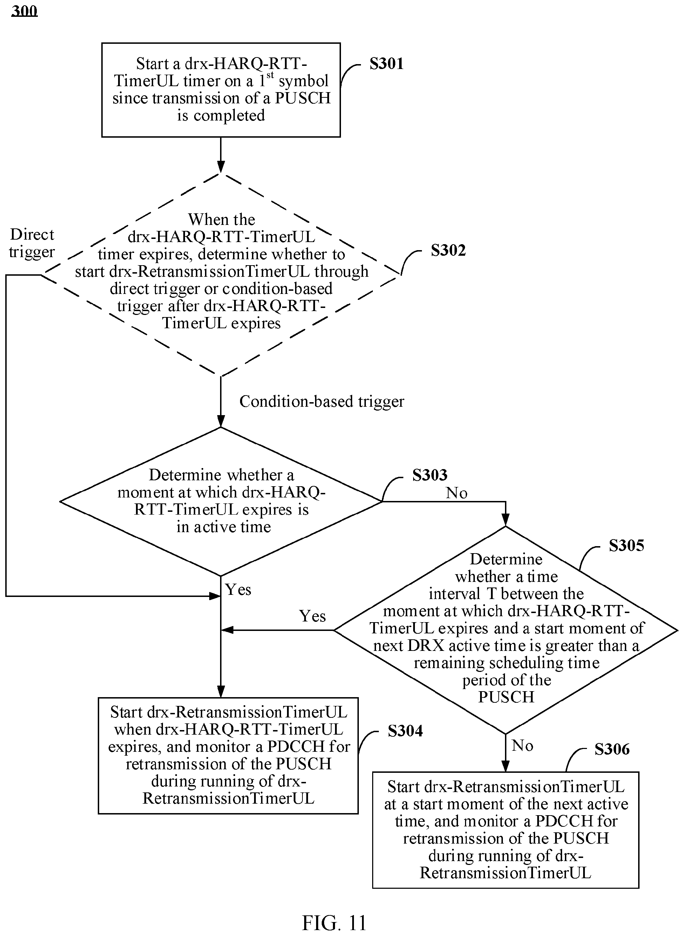

With reference to FIG. 11, the following describes a specific example of the method 200 provided in this application.

FIG. 11 is a schematic flowchart of an uplink transmission method according to this application. Different operations performed by a terminal under different conditions are described from a perspective of the terminal in the method 300. The method 300 may include one or more steps in S301 to S306.

S301: When DRX is configured for a terminal, start a drx-HARQ-RTT-TimerUL timer on a 1^{st} symbol since transmission of a PUSCH is completed.

S302: When the drx-HARQ-RTT-TimerUL timer expires, determine whether to start drx-RetransmissionTimerUL through direct trigger or condition-based trigger after drx-HARQ-RTT-TimerUL expires.

If drx-RetransmissionTimerUL is to be started through the direct trigger, S304 is performed. If Retransmission-Timer-UL is to be started through the condition-based trigger, S303 is performed.

It should be understood that S302 is an optional step. In the method 300, the terminal may alternatively not perform S302, but perform S303 after S301.

S303: Determine whether a moment at which drx-HARQ-RTT-TimerUL expires is in active time.

For example, if it is configured to start drx-RetransmissionTimerUL through the condition-based trigger after drx-HARQ-RTT-TimerUL expires, the terminal needs to further determine whether the terminal is in a DRX active state at the moment at which drx-HARQ-RTT-TimerUL expires. If the terminal is in the DRX active state when drx-HARQ-RTT-TimerUL expires, S304 is performed; or if the terminal is in a DRX inactive state when drx-HARQ-RTT-TimerUL expires, S305 is performed.

S304: Start drx-RetransmissionTimerUL when drx-HARQ-RTT-TimerUL expires, and monitor a PDCCH for retransmission of the PUSCH during running of drx-RetransmissionTimerUL.

It should be understood that, if the PDCCH for the retransmission of the PUSCH is obtained through monitoring, timing of drx-RetransmissionTimerUL is stopped. If drx-RetransmissionTimerUL expires and the PDCCH for the retransmission of the PUSCH has not been obtained through monitoring, the PDCCH for the retransmission of the PUSCH continues to be monitored in next active time.

It should be further understood that the terminal does not perform S305 and S306 after performing S304.

S305: Determine whether a time interval T between the moment at which drx-HARQ-RTT-TimerUL expires and a start moment of next DRX active time is greater than a remaining scheduling time period of the PUSCH.

If the time interval T is greater than the remaining scheduling time period of the PUSCH, S304 is performed. If the time interval T is less than the remaining scheduling time period of the PUSCH, S306 is performed.

S306: Start drx-RetransmissionTimerUL at a start moment of the next active time, and monitor a PDCCH for retransmission of the PUSCH during running of drx-RetransmissionTimerUL.

According to the foregoing solution in which drx-RetransmissionTimerUL is started through the condition-based trigger, the terminal may not frequently wake up to monitor the PDCCH on a premise that a service capacity is not affected, to reduce power consumption of the terminal.

This application further provides an uplink transmission method. The method can improve uplink data transmission reliability. The following describes the method.

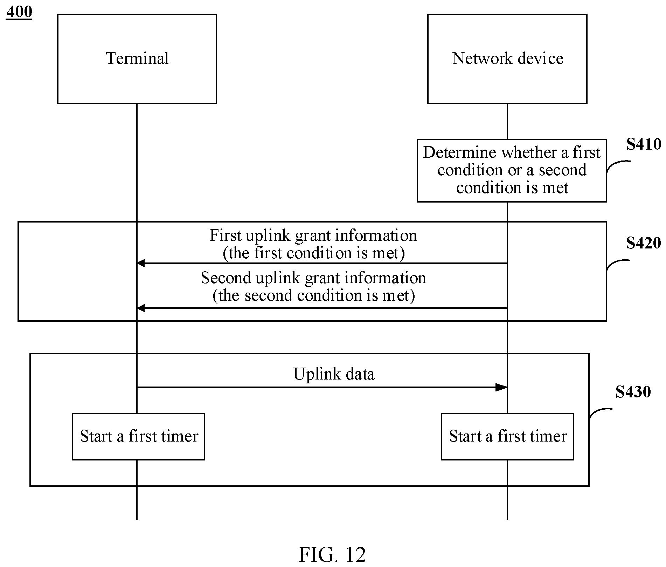

FIG. 12 is a schematic flowchart of an uplink transmission method according to this application. The method 400 may include S410 to S430.

S410: A network device determines whether a terminal meets a first condition or a second condition.

For the first condition and the second condition, refer to corresponding descriptions in steps S220 and S230 in the method 200.

Step S410 is performed when or before the network device schedules uplink data. In S410, the network device actually predicts whether the terminal meets the first condition or the second condition. A start moment of a second timer and a moment t2 at which a first timer expires (where t2 is also the start moment of the second timer) that are involved in the two conditions may be calculated by using a current moment T0, K2 (an interval between uplink scheduling DCI and a scheduled PUSCH), and duration of the first timer. In other words, t2=T0+K2+drx-HARQ-RTT-TimerUL. The uplink scheduling DCI herein is uplink grant information in step S420, namely, first uplink grant information or second uplink grant information. In an example, in a semi-persistent scheduling scenario, the second uplink grant information is valid only in a current semi-persistent resource periodicity.

It should be understood that a result determined by the network device in S410 may have a deviation from an actual result. For example, after performing S410, the network device schedules downlink transmission once again. If the downlink transmission does not occur, the moment at which the first timer expires is in inactive time. After the downlink transmission occurs, the moment at which the first timer expires is exactly in a period of drx-RetransmissionTimerDL corresponding to the downlink transmission.

S420: The network device sends the uplink grant information to the terminal. Correspondingly, the terminal receives the uplink grant information from the network device.

Specifically, the network device may first determine whether the terminal meets the first condition or the second condition, and then determine, based on the determining result, to send the uplink grant information. The uplink grant information is for scheduling the uplink data, and the terminal may send the uplink data based on the uplink grant information.

The uplink grant information may include one or more of the following: an MCS, a transmission resource, or whether to perform repeated transmission on the uplink data during initial transmission of the uplink data. The transmission resource may be a time-frequency resource.

In an example, when the first condition is met, the MCS is a first MCS. When the second condition is met, the MCS is a second MCS. In other words, under different conditions, the network device configures different MCSs for the terminal.

A modulation order corresponding to the first MCS is greater than a modulation order corresponding to the second MCS, and/or a code rate corresponding to the first MCS is greater than a code rate corresponding to the second MCS. In this way, when the second condition is met, the terminal performs uplink transmission based on the second MCS, so that uplink transmission reliability can be improved.

In another example, when the first condition is met, the transmission resource is a first transmission resource. When the second condition is met, the transmission resource is a second transmission resource. A quantity of first transmission resources is less than a quantity of second transmission resources. In other words, under different conditions, the network device configures transmission resources of different sizes for the terminal. A larger quantity of transmission resources are configured when the second condition is met, so that uplink transmission reliability can be improved.

In still another example, when the first condition is met, the repeated transmission is not performed on the uplink data during the initial transmission of the uplink data. When the second condition is met, the repeated transmission is performed on the uplink data during the initial transmission of the uplink data. In this way, when the second condition is met, the repeated transmission is performed on the uplink data during the initial transmission of the uplink data, so that uplink transmission reliability can be improved.

It should be noted that, when the uplink grant information includes the first MCS, the first transmission resource, and/or that the repeated transmission is not to be performed on the uplink data during the initial transmission of the uplink data, the uplink grant information may also be denoted as the first uplink grant information. When the uplink grant information includes the second MCS, the second transmission resource, and/or that the repeated transmission is to be performed on the uplink data during the initial transmission of the uplink data, the uplink grant information may also be denoted as the second uplink grant information.

In the semi-persistent scheduling scenario, the second uplink grant information is the DCI. In an example, the second uplink grant information may be scrambled by using a new configured scheduling (configured scheduling, CS) RNTI, for example, CS-RNTI-New. Each field of the second uplink grant information may be configured in an existing activation DCI format. In another example, the second uplink grant information may be scrambled by using a CS-RNTI, and a field format of a specific field of the DCI is changed, so that the second uplink grant information is valid only in the current semi-persistent resource periodicity.

S430: The terminal sends the uplink data to the network device based on the uplink grant information, and starts the first timer. Correspondingly, the network device receives the uplink data, and starts the first timer.

In other words, the terminal sends the uplink data by using the MCS, the transmission resource, and/or a transmission mode (namely, performing repeated transmission/not performing repeated transmission) for the initial transmission of the uplink data in the uplink grant information.

It should be understood that for operations of sending, by the terminal, the uplink data and starting the first timer, refer to S210 in the method 200.

In conclusion, according to the uplink transmission method provided in this application, on a premise that the moment at which the first timer expires is in the inactive time, it is determined whether a distance between the moment at which the first timer expires and a start moment of next active time is within a range of a remaining scheduling time period, so that the uplink transmission reliability can be dynamically adjusted, to better match a service, and improve a service capacity. For example, when the distance between the moment at which the first timer expires and the start moment of the next active time is not within the range of the remaining scheduling time period, an appropriate parameter is configured to improve the uplink transmission reliability, so that retransmission can be avoided as much as possible, to ensure that XR data is correctly communicated in a PDB, and improve user experience.

In some embodiments, the method 400 may be combined with the method 200. To be specific, after S430, S220 or S230 in the method 200 may be further performed. In this way, a power consumption reduction effect that can be achieved in the method 200 can be further achieved.

This application further provides an uplink transmission method. In the method, when a time interval between a moment at which a terminal completes sending of uplink data and a start moment of next active time is less than a remaining scheduling time period of the uplink data, a retransmission grant for the uplink data is monitored in the next active time, so that neither a first timer (for example, drx-HARQ-RTT-TimerUL) nor a second timer (for example, drx-RetransmissionTimerUL) may need to be started, to reduce power consumption of the terminal.

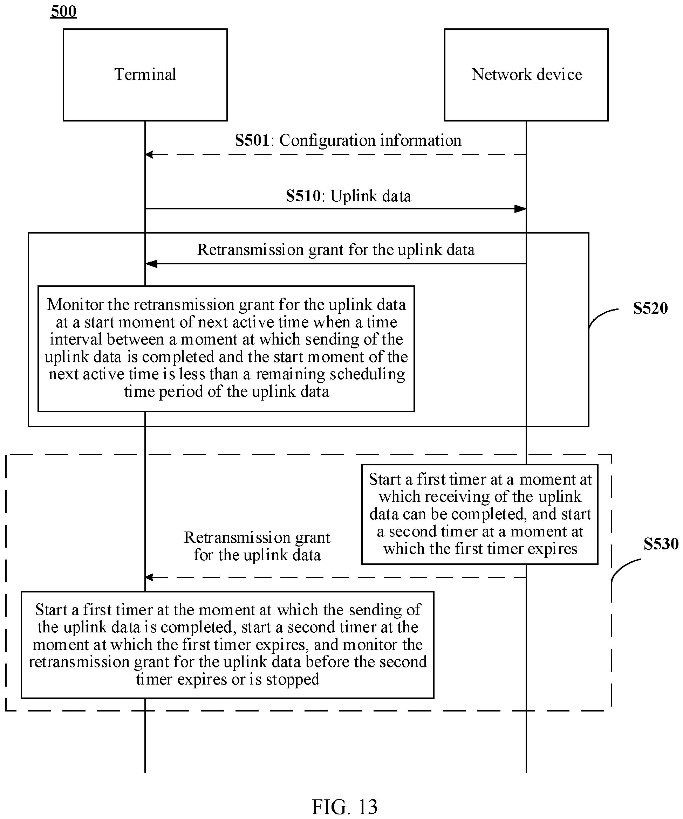

FIG. 13 is a schematic flowchart of an uplink transmission method according to this application. The method 500 may include S510 and S520.

S510: A terminal sends uplink data to a network device. Correspondingly, the network device receives the uplink data from the terminal.

Specifically, the terminal sends the uplink data based on scheduling from the network device, and correspondingly, the network device attempts to receive the uplink data. If the network device obtains the uplink data through receiving, the network device demodulates or decodes the data, to determine whether the uplink data is successfully received.

It should be understood that the uplink data may be a PUSCH, or the uplink data is carried in a PUSCH.

S520: The terminal monitors, when a time interval between a moment at which the sending of the uplink data is completed and a start moment of next active time is less than a remaining scheduling time period of the uplink data, a retransmission grant for the uplink data at the start moment of the next active time until the retransmission grant for the uplink data is obtained through monitoring or until the next active time ends.

Correspondingly, when a time interval between a moment at which the network device receives the uplink data and the start moment of the next active time is less than the remaining scheduling time period of the uplink data, and the network device does not successfully receive the uplink data, the network device sends the retransmission grant for the uplink data to the terminal in the next active time.

Specifically, the network device receives the uplink data based on scheduling information for the uplink data. When the network device does not successfully receive the uplink data at the moment at which the terminal completes the sending of the uplink data, the network device determines whether the time interval between the moment at which the terminal completes the sending of the uplink data and the start moment of the next active time is less than the remaining scheduling time period of the uplink data. If the time interval between the moment at which the terminal completes the sending of the uplink data and the start moment of the next active time is less than the remaining scheduling time period of the uplink data, the network device no longer starts a first timer and a second timer, but sends the retransmission grant for the uplink data to the terminal in the next active time. Correspondingly, the terminal may determine whether the time interval between the moment at which the terminal completes the sending of the uplink data and the start moment of the next active time is less than the remaining scheduling time period of the uplink data. If the time interval is less than the remaining scheduling time period of the uplink data, the terminal no longer starts a first timer and a second timer, but monitors the retransmission grant for the uplink data in the next active time. If the terminal obtains the retransmission grant for the uplink data through monitoring in the active time, the terminal retransmits the uplink data based on the retransmission grant.

It should be understood that the moment at which the network device receives the uplink data is the same as the moment at which the terminal completes the sending of the uplink data. For example, the moment at which the terminal completes the sending of the uplink data may be an end moment of a last symbol of the uplink data. For example, assuming that the network device schedules the terminal to send the uplink data on a symbol 2 to a symbol 9 in a specific slot, the moment at which the terminal completes the sending of the uplink data may be an end moment of the symbol 9 or a start moment of a symbol 10. Correspondingly, the moment at which the network device receives the uplink data may be the end moment of the symbol 9 or the start moment of the symbol 10.

For example, the next active time may be a time period in which a PDCCH needs to be monitored and that is after and closest to, in terms of time, the moment at which the terminal completes the sending of the uplink data. For example, the next active time may be a running period of drx-RetransmissionTimerDL or an on duration period that is after and closest to, in terms of time, the moment at which the terminal completes the sending of the uplink data. The next active time may alternatively be an on duration period that is after and closest to, in terms of time, the moment at which the terminal completes the sending of the uplink data.

For example, the start moment of the next active time may be a start position of a 1^{st} symbol of the next active time.

The remaining scheduling time period of the uplink data is a remaining scheduling time period that is of the uplink data and that starts from the moment at which the terminal completes the sending of the uplink data. The uplink data has a transmission delay requirement. If the uplink data is not scheduled in the remaining scheduling time period of the uplink data, the uplink data becomes invalid. In an example, a PDB may represent the transmission delay requirement of the uplink data. For example, assuming that the PDB is 30 ms, the uplink data needs to be scheduled within 30 ms. If the uplink data is not scheduled within 30 ms, the uplink data becomes invalid.

A person skilled in the art may understand that, for a terminal side, the terminal may obtain the PDB (configured by the network device by using QoS rules) through a core network device, and may sense a waiting time period t that is needed after the uplink data arrives at a buffer (buffer) and that ends at the moment at which the terminal completes the sending of the uplink data. Therefore, the remaining scheduling time period may be calculated as PDB-t. For a network device side, in a manner, the network device may obtain the PDB (configured by using a QoS profile) through the core network device. The terminal reports, by using an SR, a BSR, a new MAC CE, or the like, the waiting delay t that has been consumed after the uplink data arrives at the buffer, and the remaining scheduling time period may be calculated by using PDB-t. In another manner, the terminal may report the remaining scheduling time period of the uplink data to the network device.

In addition, retransmitted uplink data may be completely the same as the uplink data. Alternatively, retransmitted uplink data and the uplink data have same content, but may have different redundancy versions (redundancy versions, RVs) or other content that does not affect decoding of the uplink data.

It should be further understood that the remaining scheduling time period of the uplink data described in the method is equal to a sum of the remaining scheduling time period described in the method 200 and duration of the first timer.

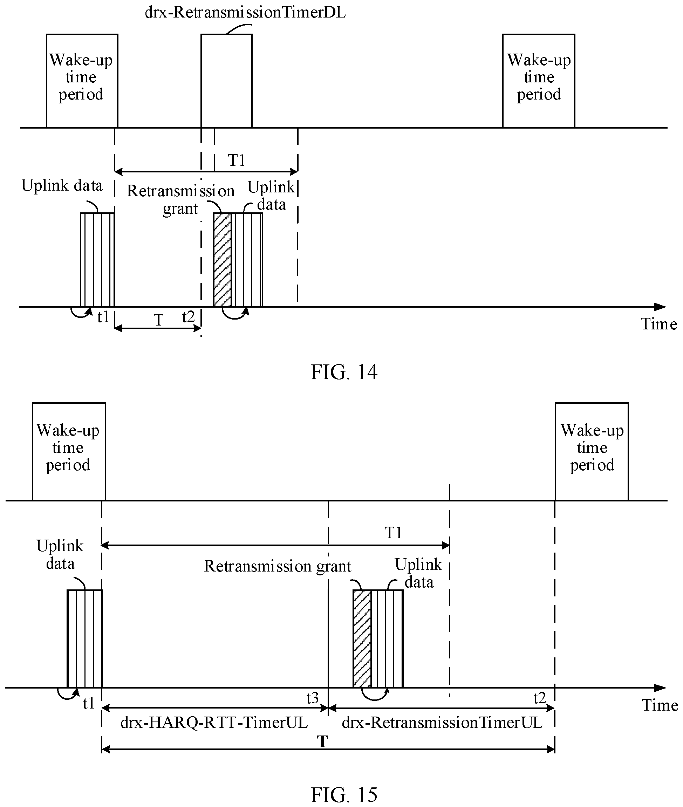

The following describes S520 by using an example with reference to FIG. 14 that is a timing diagram of an example of data transmission.

Refer to FIG. 14. A time interval between a moment t1 at which the terminal completes the sending of the uplink data and a start moment t2 of next active time (namely, a period of drx-RetransmissionTimerDL shown in the figure) is T, a remaining scheduling time period of the uplink data is T1, and T<T1. In this case, even if the uplink data is retransmitted in the next active time, the uplink data does not become invalid if a transmission occasion is set appropriately, in other words, the uplink data may be delayed to the next active time for retransmission. In addition, because the terminal is in inactive time at the moment t2, to reduce power consumption, the terminal may not retransmit the uplink data based on drx-HARQ-RTT-TimerUL and drx-RetransmissionTimerUL, but monitor the retransmission grant for the uplink data at the moment t2. If the terminal obtains the retransmission grant for the uplink data through monitoring in the next active time, the terminal retransmits the uplink data based on the retransmission grant.

In conclusion, according to the uplink transmission method provided in this application, when the time interval between the moment at which the terminal completes the sending of the uplink data and the start moment of the next active time is less than the remaining scheduling time period of the uplink data, the retransmission grant for the uplink data may be monitored in the next active time. In this way, neither the first timer (for example, drx-HARQ-RTT-TimerUL) nor the second timer (for example, drx-RetransmissionTimerUL) needs to be started, and the retransmission grant for the uplink data does not need to be monitored before the second timer expires. This can reduce the power consumption of the terminal.

In some embodiments, the method may further include the following step:
S530: When the time interval between the moment at which the terminal completes the sending of the uplink data and the start moment of the next active time is greater than or equal to the remaining scheduling time period of the uplink data, the terminal starts the first timer at the moment at which the terminal completes the sending of the uplink data, starts the second timer at a moment at which the first timer expires, and monitors the retransmission grant for the uplink data before the second timer expires or is stopped.

Correspondingly, when the time interval between the moment at which the uplink data is received and the start moment of the next active time is greater than or equal to the remaining scheduling time period of the uplink data, and the uplink data is not successfully received, the network device starts the first timer at the moment at which the terminal completes the sending of the uplink data, starts the second timer at the moment at which the first timer expires, and sends the retransmission grant for the uplink data to the terminal before the second timer expires or is stopped.

Specifically, the network device receives the uplink data based on the scheduling information for the uplink data. When the network device does not successfully receive the uplink data at the moment at which the uplink data is received, the network device determines whether the time interval between the moment at which the terminal completes the sending of the uplink data and the start moment of the next active time is less than the remaining scheduling time period of the uplink data. If the time interval between the moment at which the terminal completes the sending of the uplink data and the start moment of the next active time is greater than or equal to the remaining scheduling time period of the uplink data, the network device starts the first timer at the moment at which the terminal completes the sending of the uplink data, starts the second timer at the moment at which the first timer expires, and sends the retransmission grant for the uplink data during running of the second timer. Correspondingly, the terminal may determine whether the time interval between the moment at which the terminal completes the sending of the uplink data and the start moment of the next active time is less than the remaining scheduling time period of the uplink data. If the time interval is greater than or equal to the remaining scheduling time period of the uplink data, the network device starts the first timer at the moment at which the sending of the uplink data is completed, starts the second timer at the moment at which the first timer expires, and monitors the retransmission grant for the uplink data during the running of the second timer. If the terminal obtains the retransmission grant for the uplink data through monitoring during the running of the second timer, the terminal retransmits the uplink data based on the retransmission grant.

It should be noted that when the time interval between the moment at which the network device receives the uplink data and the start moment of the next active time is greater than or equal to the remaining scheduling time period of the uplink data, if the network device successfully receives the uplink data, the network device may or may not start the first timer and/or the second timer.

Using an example in which the first timer is drx-HARQ-RTT-TimerUL and the second timer is drx-RetransmissionTimerUL, the following describes S530 with reference to FIG. 15 that is a timing diagram of data transmission.

Refer to FIG. 15. A time interval between a moment t1 at which the terminal completes the sending of the uplink data and a start moment t2 of next active time (namely, a wake-up time period shown in the figure) is T, a remaining scheduling time period of the uplink data is T1, and T>T1. In this case, if the uplink data is not retransmitted within T1, the uplink data becomes invalid. Therefore, drx-HARQ-RTT-TimerUL may be started at the time t1, and drx-RetransmissionTimerUL may be started at a moment t3 at which the first timer expires. During running of drx-RetransmissionTimerUL, the terminal monitors the retransmission grant for the uplink data. Moreover, once the terminal obtains the retransmission grant for the uplink data through monitoring, timing of drx-RetransmissionTimerUL is stopped. After obtaining the retransmission grant for the uplink data through monitoring, the terminal may retransmit the uplink data based on the retransmission grant.

According to this solution, when the time interval between the moment at which the terminal completes the sending of the uplink data and the start moment of the next active time is greater than or equal to the remaining scheduling time period of the uplink data, the second timer is started at the moment at which the first timer expires, so that retransmission scheduling can be performed for the uplink data in a timely manner, to avoid invalidity of the uplink data caused by untimely scheduling.

It should be noted that an occasion for determining, by the terminal or the network device, whether the time interval between the moment at which the terminal completes the sending of the uplink data and the start moment of the next active time is less than the remaining scheduling time period of the uplink data is not limited in this application. For example, the terminal or the network device may perform determining at the moment at which the terminal completes the sending of the uplink data, or may perform determining when the scheduling information for the uplink data is obtained.

In some embodiments, before S510, the method may further include the following step:
S501: The network device sends configuration information to the terminal.

Correspondingly, the terminal receives the configuration information from the network device. After receiving the configuration information, the terminal performs S520 or S530 based on the configuration information after performing S510.

The configuration information indicates the terminal to monitor, when the time interval between the moment at which the terminal completes the sending of the uplink data and the start moment of the next active time is less than the remaining scheduling time period of the uplink data, the retransmission grant for the uplink data at the start moment of the next active time until the retransmission grant for the uplink data is obtained through monitoring or until the next active time ends, and start, when the time interval between the moment at which the terminal completes the sending of the uplink data and the start moment of the next active time is greater than or equal to the remaining scheduling time period of the uplink data, the first timer at the moment at which the sending of the uplink data is completed, start the second timer at the moment at which the first timer expires, and monitor the retransmission grant for the uplink data before the second timer expires or is stopped.

For example, the configuration information may indicate whether a trigger mode is condition-based trigger or direct trigger. The condition-based trigger means: It is determined, at the moment at which the sending of the uplink data is completed, whether the time interval between the moment at which the terminal completes the sending of the uplink data and the start moment of the next active time is less than the remaining scheduling time period of the uplink data. If the time interval between the moment at which the terminal completes the sending of the uplink data and the start moment of the next active time is less than the remaining scheduling time period of the uplink data, the terminal monitors the retransmission grant for the uplink data at the start moment of the next active time until the retransmission grant for the uplink data is obtained through monitoring or until the next active time ends. If the time interval between the moment at which the terminal completes the sending of the uplink data and the start moment of the next active time is greater than or equal to the remaining scheduling time period of the uplink data, the terminal starts the first timer at the moment at which the sending of the uplink data is completed, starts the second timer at the moment at which the first timer expires, and monitors the retransmission grant for the uplink data before the second timer expires or is stopped. In this way, the timer may directly indicate the condition-based trigger to indirectly indicate, to the terminal, an occasion for monitoring the retransmission grant for the uplink data. In addition, if the trigger mode is the direct trigger, there is no need to determine, at the moment at which the sending of the uplink data is completed, whether the time interval between the moment at which the terminal completes the sending of the uplink data and the start moment of the next active time is less than the remaining scheduling time period of the uplink data, the first timer is directly started at the moment at which the sending of the uplink data is completed, and the second timer is started at the moment t2 at which the first timer expires.

In an example, the configuration information may be carried in physical layer signaling (for example, DCI) or higher layer signaling (for example, a MAC CE or RRC signaling).

For example, in a configured grant (configured grant, CG) type (Type) 1 mode, a field (for example, a retransmission trigger Retransmission-Trigger field) may be added to the RRC signaling. Alternatively, in a CG type 2 mode, a Retransmission-Trigger field may be added to the RRC signaling, or one-bit (bit) information may be added to the DCI, to indicate the trigger mode.

In another example, the configuration information may be jointly determined by using physical layer signaling and higher layer signaling. For example, a candidate trigger mode set may be configured by using a MAC CE or RRC signaling, and DCI may indicate the condition-based trigger in the candidate trigger mode set. Alternatively, a candidate trigger mode set is configured by using RRC signaling, and a MAC CE may indicate the condition-based trigger in the candidate trigger mode set. Alternatively, a set of candidate trigger mode sets is configured by using RRC signaling, a MAC CE indicates a candidate trigger mode set, and DCI may indicate the condition-based trigger in the candidate trigger mode set.

According to the foregoing solution, the network device may flexibly configure, for the terminal based on an actual requirement, a trigger mode for starting the first timer and/or the second timer, to better adapt to requirements in different scenarios.

This application further provides an uplink transmission method. The method can improve uplink data transmission reliability. The following describes the method.

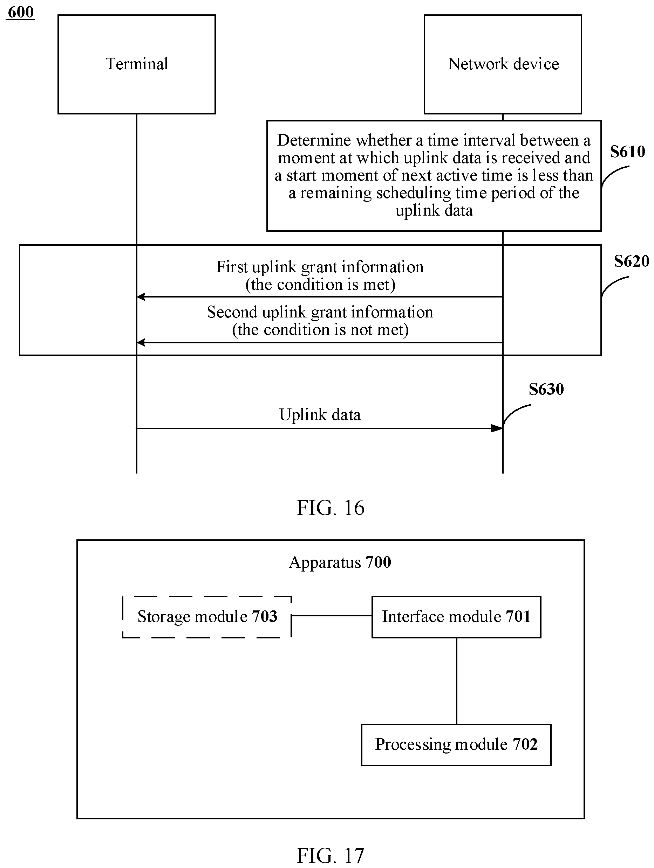

FIG. 16 is a schematic flowchart of an uplink transmission method according to this application. The method 600 may include S610 to S630. For concepts, for example, a moment at which a terminal completes sending of uplink data, next active time, a start moment of the next active time, and a remaining scheduling time period of the uplink data, in the method 600 that are the same as those in the method 500, refer to corresponding descriptions in the method 500.

S610: A network device determines, at a moment at which the uplink data is received, whether a third condition is met.

The third condition means that a time interval between the moment at which the terminal completes the sending of the uplink data and the start moment of the next active time is less than the remaining scheduling time period of the uplink data.

S620: The network device sends uplink grant information to the terminal. Correspondingly, the terminal receives the uplink grant information from the network device.

Specifically, the network device may first determine whether the terminal meets the third condition, and then determine, based on a determining result, to send the uplink grant information. The uplink grant information is for scheduling the uplink data, and the terminal may send the uplink data based on the uplink grant information.

The uplink grant information may include one or more of the following: an MCS, a transmission resource, or whether to perform repeated transmission on the uplink data during initial transmission of the uplink data. The transmission resource may be a time-frequency resource. In an example, when the third condition is met, the MCS is a first MCS. When the third condition is not met, the MCS is a second MCS. In other words, under different conditions, the network device configures different MCSs for the terminal.

A modulation order corresponding to the first MCS is greater than a modulation order corresponding to the second MCS, and/or a code rate corresponding to the first MCS is greater than a code rate corresponding to the second MCS. In this way, when the third condition is not met, the terminal performs uplink transmission based on the second MCS, so that uplink transmission reliability can be improved.

In another example, when the third condition is met, the transmission resource is a first transmission resource. When the third condition is not met, the transmission resource is a second transmission resource. A quantity of first transmission resources is less than a quantity of second transmission resources. In other words, under different conditions, the network device configures transmission resources of different sizes for the terminal. A larger quantity of transmission resources are configured when the third condition is not met, so that uplink transmission reliability can be improved.

In still another example, when the third condition is met, the repeated transmission is not performed on the uplink data during the initial transmission of the uplink data. When the third condition is not met, the repeated transmission is performed on the uplink data during the initial transmission of the uplink data. In this way, when the third condition is not met, the repeated transmission is performed on the uplink data during the initial transmission of the uplink data, so that uplink transmission reliability can be improved.

It should be noted that, when the uplink grant information includes the first MCS, the first transmission resource, and/or that the repeated transmission is not to be performed on the uplink data during the initial transmission of the uplink data, the uplink grant information may also be denoted as first uplink grant information. When the uplink grant information includes the second MCS, the second transmission resource, and/or that the repeated transmission is to be performed on the uplink data during the initial transmission of the uplink data, the uplink grant information may also be denoted as second uplink grant information.

In an example, in a semi-persistent scheduling scenario, the second uplink grant information is valid only in a current semi-persistent resource periodicity.

In the semi-persistent scheduling scenario, the second uplink grant information is DCI. In an example, the second uplink grant information may be scrambled by using a new RNTI, for example, CS-RNTI-New. Each field of the second uplink grant information may be configured in an existing activation DCI format. In another example, the second uplink grant information may be scrambled by using a CS-RNTI, and a field format of a specific field of the DCI is changed.

S630: The terminal sends the uplink data to the network device based on the uplink grant information. Correspondingly, the network device receives the uplink data.

In other words, the terminal sends the uplink data by using the MCS, the transmission resource, and/or a transmission mode (namely, performing repeated transmission/not performing repeated transmission) for the initial transmission of the uplink data in the uplink grant information.

In conclusion, according to the uplink transmission method provided in this application, the network device determines, at the moment at which the network device receives the uplink data, whether the time interval between the moment and the start moment of the next active time is within a range of the remaining scheduling time period, so that the uplink transmission reliability can be dynamically adjusted, to better match a service and improve a service capacity. For example, when a distance between the moment at which the network device receives the uplink data and the start moment of the next active time is not within the range of the remaining scheduling time period, an appropriate parameter is configured to improve the uplink transmission reliability, so that retransmission can be avoided as much as possible, to ensure that XR data is correctly communicated in a PDB, and improve user experience.

In some embodiments, the method 600 may be combined with the method 500. To be specific, after S630, S520 or S530 in the method 500 may be further performed. In this way, a power consumption reduction effect that can be achieved in the method 500 can be further achieved.

Embodiments of this application further provide corresponding apparatuses corresponding to the methods provided in the foregoing method embodiments. The apparatus includes a corresponding unit or module configured to perform the foregoing embodiments. The module may be software, hardware, or a combination of software and hardware.

FIG. 17 is a diagram of a communication apparatus 700 according to this application. The apparatus 700 may include an interface module 701 and a processing module 702. Optionally, the apparatus 700 may further include a storage module 703.

In a possible design, one or more modules in FIG. 17 may be implemented by one or more processors, implemented by one or more processors and memories, implemented by one or more processors and transceivers, or implemented by one or more processors, memories, and transceivers. This is not limited in embodiments of this application. The processor, the memory, and the transceiver may be disposed separately, or may be integrated.

The apparatus 700 has a function of implementing the terminal described in embodiments of this application. For example, the apparatus 700 includes a corresponding module, unit, or means (means) used by the terminal to perform the steps that are related to the terminal and that are described in embodiments of this application. The function, the unit, or the means (means) may be implemented by software or hardware, may be implemented by hardware executing corresponding software, or may be implemented by a combination of software and hardware. For details, further refer to the corresponding descriptions in the foregoing corresponding method embodiment.

Alternatively, the apparatus has a function of implementing the network device described in embodiments of this application. For example, the apparatus includes a corresponding module, unit, or means (means) used by the network device to perform the steps that are related to the network device and that are described in embodiments of this application. The function, the unit, or the means (means) may be implemented by software or hardware, may be implemented by hardware executing corresponding software, or may be implemented by a combination of software and hardware. For details, further refer to the corresponding descriptions in the foregoing corresponding method embodiment.

For example, the modules in the apparatus 700 in this embodiment of this application may be configured to perform operations performed by the terminal in the method 200.

In a possible implementation, the apparatus 700 may include the interface module 701 and the processing module 702. The interface module 701 is configured to send uplink data to a network device, and start a first timer, where duration of the first timer is shortest duration before a retransmission grant for the uplink data is expected to be received. The processing module 702 is configured to start a second timer at a moment t1 when a first condition is met, and monitor the retransmission grant for the uplink data before the second timer expires or is stopped, where t1=t2+T, t2 represents a moment at which the first timer expires, T represents a time interval, the time interval is a time interval between the moment at which the first timer expires and a start moment of next active time, and the first condition is that the moment at which the first timer expires is in inactive time and the time interval is less than a remaining scheduling time period of the uplink data.

In some possible implementations of the apparatus 700, the processing module 702 is further configured to start, when a second condition is met, the second timer at the moment at which the first timer expires, and monitor the retransmission grant for the uplink data before the second timer expires or is stopped, where the second condition is that the moment at which the first timer expires is in active time, or that the moment at which the first timer expires is in the inactive time and the time interval is greater than or equal to the remaining scheduling time period of the uplink data.

In some possible implementations of the apparatus 700, the interface module 701 is further configured to receive configuration information from the network device. The processing module 702 is specifically configured to determine, based on the configuration information, to start the second timer at the moment t1 when the first condition is met.

In some possible implementations of the apparatus 700, the interface module 701 is further configured to receive configuration information from the network device. The processing module 702 is specifically configured to determine, based on the configuration information, to start, when the second condition is met, the second timer at the moment at which the first timer expires.

For example, the modules in the apparatus 700 in this embodiment of this application may be configured to perform operations performed by the network device in the method 200.

In a possible implementation, the apparatus 700 may include the interface module 701 and the processing module 702.

In some possible implementations of the apparatus 700, the interface module 701 is configured to receive uplink data from a terminal, and start a first timer, where duration of the first timer is shortest duration before the terminal expects to receive a retransmission grant for the uplink data. The processing module 702 is configured to: start a second timer at a moment t1 when a first condition is met, and control the interface module 701 to send the retransmission grant for the uplink data to the terminal before the second timer expires or is stopped, where t1=t2+T, t2 represents a moment at which the first timer expires, T represents a time interval, the time interval is a time interval between the moment at which the first timer expires and a start moment of next active time, and the first condition is that the moment at which the first timer expires is in inactive time and the time interval is less than a remaining scheduling time period of the uplink data; and start, when a second condition is met, the second timer at the moment at which the first timer expires, and control the interface module 701 to send the retransmission grant for the uplink data to the terminal before the second timer expires or is stopped, where the second condition is that the moment at which the first timer expires is in active time, or that the moment at which the first timer expires is in the inactive time and the time interval is greater than or equal to the remaining scheduling time period of the uplink data.

**In** some possible implementations of the apparatus 700, the interface module 701 is further configured to: send first uplink grant information to the terminal when the first condition is met, where the first uplink grant information is for scheduling the uplink data, and the first uplink grant information indicates a first modulation and coding scheme MCS; and send second uplink grant information to the terminal when the second condition is met, where the second uplink grant information is for scheduling the uplink data, and the second uplink grant information indicates a second MCS, where a modulation order corresponding to the first MCS is greater than a modulation order corresponding to the second MCS, and/or a code rate corresponding to the first MCS is greater than a code rate corresponding to the second MCS.

**In** some possible implementations of the apparatus 700, the interface module 701 is further configured to: send first uplink grant information to the terminal when the first condition is met, where the first uplink grant information is for scheduling the uplink data, and the first uplink grant information indicates a first transmission resource; and send second uplink grant information to the terminal when the second condition is met, where the second uplink grant information is for scheduling the uplink data, and the second uplink grant information indicates a second transmission resource, where a quantity of first transmission resources is less than a quantity of second transmission resources.

In some possible implementations of the apparatus 700, the interface module 701 is further configured to send configuration information to the terminal, where the configuration information indicates the terminal to start the second timer at the moment t1 when the first condition is met, and start, when the second condition is met, the second timer at the moment at which the first timer expires.

For example, the modules in the apparatus 700 in this embodiment of this application may be configured to perform operations performed by the network device in the method 400.

In a possible implementation, the apparatus 700 may include the interface module 701 and the processing module 702. The interface module 701 is configured to: send first uplink grant information to a terminal when a first condition is met, where the first uplink grant information is for scheduling uplink data, the first uplink grant information indicates a first modulation and coding scheme MCS, the first condition is that a moment at which a first timer expires is in inactive time and a time interval is less than a remaining scheduling time period of the uplink data, and the time interval is a time interval between the moment at which the first timer expires and a start moment of next active time; send second uplink grant information to the terminal when a second condition is met, where the second uplink grant information is for scheduling the uplink data, and the second uplink grant information indicates a second MCS, where a modulation order corresponding to the first MCS is greater than a modulation order corresponding to the second MCS, and/or a code rate corresponding to the first MCS is greater than a code rate corresponding to the second MCS, and the second condition is that the moment at which the first timer expires is in active time, or that the moment at which the first timer expires is in the inactive time and the time interval is greater than or equal to the remaining scheduling time period of the uplink data; and receive the uplink data from the terminal, and start the first timer, where duration of the first timer is shortest duration before the terminal expects to receive a retransmission grant for the uplink data.

In some possible implementations of the apparatus 700, the first uplink grant information further indicates a first transmission resource, the second uplink grant information further indicates a second transmission resource, and a quantity of first transmission resources is less than a quantity of second transmission resources.

In some possible implementations of the apparatus 700, the processing module 702 is configured to: start a second timer at a moment t1 when the first condition is met and the uplink data is not successfully received, and control the interface module 701 to send the retransmission grant for the uplink data to the terminal before the second timer expires or is stopped, where t1=t2+T, t2 represents the moment at which the first timer expires, and T represents the time interval. The processing module 702 is further configured to: start, when the second condition is met, the second timer at the moment at which the first timer expires, and control the interface module 701 to send the retransmission grant for the uplink data to the terminal before the second timer expires or is stopped.

In some possible implementations of the apparatus 700, the interface module 701 is further configured to send configuration information to the terminal, where the configuration information indicates the terminal to start the second timer at the moment t1 when the first condition is met, and start, when the second condition is met, the second timer at the moment at which the first timer expires.

For example, the modules in the apparatus 700 in this embodiment of this application may be configured to perform operations performed by the terminal in the method 500.

In a possible implementation, the apparatus 700 may include the interface module 701 and the processing module 702. The interface module 701 is configured to send uplink data to a network device. The processing module 702 is configured to monitor, when a time interval between a moment at which the interface module 701 completes the sending of the uplink data and a start moment of next active time is less than a remaining scheduling time period of the uplink data, a retransmission grant for the uplink data at the start moment of the next active time until the retransmission grant for the uplink data is obtained through monitoring or until the next active time ends.

In some possible implementations of the apparatus 700, when the time interval between the moment at which the interface module 701 completes the sending of the uplink data and the start moment of the next active time is greater than or equal to the remaining scheduling time period of the uplink data, the processing module 702 starts a first timer at the moment at which the interface module 701 completes the sending of the uplink data, starts a second timer at a moment at which the first timer expires, and monitors the retransmission grant for the uplink data before the second timer expires or is stopped, where duration of the first timer is shortest duration before the retransmission grant for the uplink data is expected to be received.

In some possible implementations of the apparatus 700, the interface module 701 is further configured to receive configuration information from the network device. The processing module 702 is specifically configured to determine, based on the configuration information, to monitor, when the time interval is less than the remaining scheduling time period, the retransmission grant for the uplink data at the start moment of the next active time until the retransmission grant for the uplink data is obtained through monitoring or until the next active time ends.

In some possible implementations of the apparatus 700, the interface module 701 is further configured to receive configuration information from the network device. The processing module 702 is specifically configured to: determine, based on the configuration information, to start, when the time interval is greater than or equal to the remaining scheduling time period, the first timer at the moment at which the sending of the uplink data is completed.

For example, the modules in the apparatus 700 in this embodiment of this application may be configured to perform operations performed by the network device in the method 500.

In a possible implementation, the apparatus 700 may include the interface module 701 and the processing module 702. The interface module 701 is configured to: receive uplink data from a terminal; and when a time interval between a moment at which the uplink data is received and a start moment of next active time is less than a remaining scheduling time period of the uplink data, and the uplink data is not successfully received, send a retransmission grant for the uplink data to the terminal before the next active time ends. The processing module 702 is configured to: when the time interval between the moment at which the uplink data is received and the start moment of the next active time is greater than or equal to the remaining scheduling time period of the uplink data, and the uplink data is not successfully received, start a first timer at the moment at which the uplink data is received, start a second timer at a moment at which the first timer expires, and control the interface module 701 to send the retransmission grant for the uplink data to the terminal before the second timer expires or is stopped, where duration of the first timer is shortest duration before the terminal expects to receive the retransmission grant for the uplink data.

In some possible implementations of the apparatus 700, the interface module 701 is further configured to: send first uplink grant information to the terminal when the time interval is less than the remaining scheduling time period, where the first uplink grant information is for scheduling the uplink data, and the first uplink grant information indicates a first modulation and coding scheme MCS; and send second uplink grant information to the terminal when the time interval is greater than or equal to the remaining scheduling time period, where the second uplink grant information is for scheduling the uplink data, and the second uplink grant information indicates a second MCS, where a modulation order corresponding to the first MCS is greater than a modulation order corresponding to the second MCS, and/or a code rate corresponding to the first MCS is greater than a code rate corresponding to the second MCS.

In some possible implementations of the apparatus 700, the interface module 701 is further configured to: send first uplink grant information to the terminal when the time interval is less than the remaining scheduling time period, where the first uplink grant information is for scheduling the uplink data, and the first uplink grant information indicates a first transmission resource; and send second uplink grant information to the terminal when the time interval is greater than or equal to the remaining scheduling time period, where the second uplink grant information is for scheduling the uplink data, the second uplink grant information indicates a second transmission resource, and a quantity of first transmission resources is less than a quantity of second transmission resources.

In some possible implementations of the apparatus 700, the interface module 701 is further configured to send configuration information to the terminal, where the configuration information indicates the terminal to monitor, when the time interval is less than the remaining scheduling time period, the retransmission grant for the uplink data at the start moment of the next active time until the retransmission grant for the uplink data is obtained through monitoring or until the next active time ends, and start, when the time interval is greater than or equal to the remaining scheduling time period, the first timer at the moment at which the uplink data is received.

For example, the modules in the apparatus 700 in this embodiment of this application may be configured to perform operations performed by the network device in the method 600.

In a possible implementation, the apparatus 700 may include the interface module 701 and the processing module 702. The interface module 701 is configured to send first uplink grant information to a terminal when a time interval between a moment at which uplink data is received and a start moment of next active time is less than a remaining scheduling time period of the uplink data, where the first uplink grant information is for scheduling the uplink data, and the first uplink grant information indicates a first modulation and coding scheme MCS; send second uplink grant information to the terminal when the time interval is greater than or equal to the remaining scheduling time period, where the second uplink grant information is for scheduling the uplink data, and the second uplink grant information indicates a second MCS, where a modulation order corresponding to the first MCS is greater than a modulation order corresponding to the second MCS, and/or a code rate corresponding to the first MCS is greater than a code rate corresponding to the second MCS; and receive the uplink data from the terminal.

In some possible implementations of the apparatus 700, the first uplink grant information further indicates a first transmission resource, the second uplink grant information further indicates a second transmission resource, and a quantity of first transmission resources is less than a quantity of second transmission resources.

In some possible implementations of the apparatus 700, the interface module 701 is further configured to: when the time interval is less than the remaining scheduling time period, and the uplink data is not successfully received, send a retransmission grant for the uplink data to the terminal in the next active time; and when the time interval is greater than or equal to the remaining scheduling time period, and the uplink data is not successfully received, start a first timer at the moment at which the uplink data is received, start a second timer at a moment at which the first timer expires, and send the retransmission grant for the uplink data to the terminal before the second timer expires or is stopped, where duration of the first timer is shortest duration before the terminal expects to receive the retransmission grant for the uplink data.

In some possible implementations of the apparatus 700, the interface module 701 is further configured to send configuration information to the terminal, where the configuration information indicates the terminal to monitor, when the time interval is less than the remaining scheduling time period, the retransmission grant for the uplink data at the start moment of the next active time until the retransmission grant for the uplink data is obtained through monitoring or until the next active time ends, and start, when the time interval is greater than or equal to the remaining scheduling time period, the first timer at the moment at which the uplink data is received.

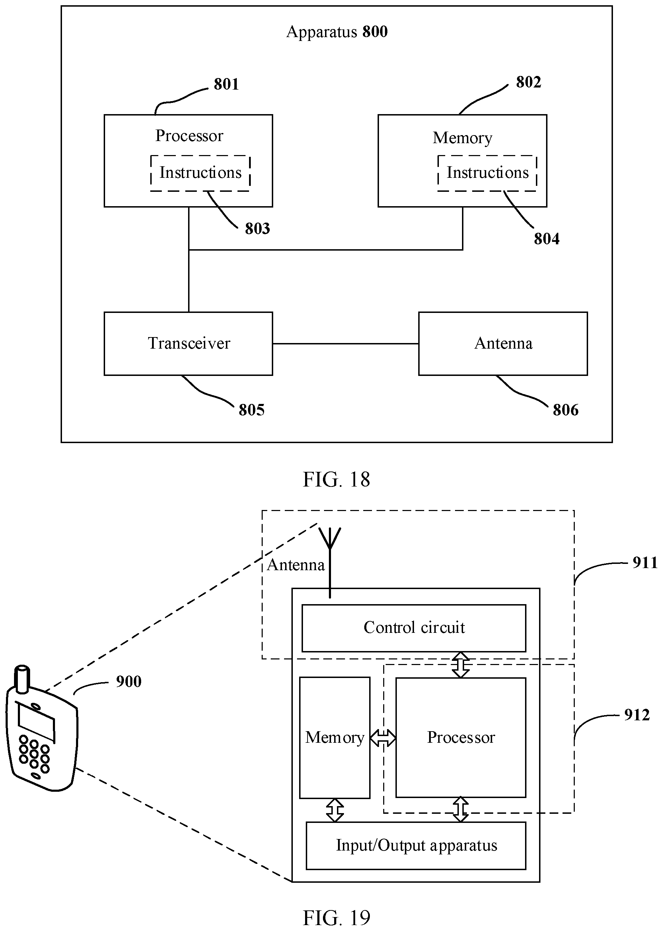

FIG. 18 is a diagram of a communication apparatus 800 according to this application. The apparatus 800 may be a network device, may be a terminal, may be a chip, a chip system, a processor, or the like that supports a network device in implementing the foregoing method, or may be a chip, a chip system, a processor, or the like that supports a terminal in implementing the foregoing method. The apparatus 800 may be configured to implement the methods described in the foregoing method embodiments. For details, refer to the descriptions in the foregoing method embodiments.

The apparatus 800 may include one or more processors 801. The processor 801 may also be referred to as a processing unit, and may implement a specific control function. The processor 801 may be a general-purpose processor, a special-purpose processor, or the like. For example, the processor 801 may be a baseband processor or a central processing unit. The baseband processor may be configured to process a communication protocol and communication data. The central processing unit may be configured to: control the communication apparatus (for example, a base station, a baseband chip, a terminal, a terminal chip, a DU, or a CU), execute a software program, and process data of the software program.

**In** an optional design, the processor 801 may also store instructions and/or data 803. The instructions and/or data 803 may be run by the processor, so that the apparatus 800 performs the methods described in the foregoing method embodiments.

In another optional design, the processor 801 may include a transceiver unit configured to implement receiving and sending functions. For example, the transceiver unit may be a transceiver circuit, an interface, an interface circuit, or a transceiver circuit configured to implement the receiving and sending functions. The receiving and sending functions may be separated or integrated. The transceiver circuit, the interface, or the interface circuit may be configured to read and write code/data. Alternatively, the transceiver circuit, the interface, or the interface circuit may be configured to communicate or transfer a signal.

In still another possible design, the apparatus 800 may include a circuit. The circuit may implement a sending, receiving, or communication function in the foregoing method embodiments.

Optionally, the apparatus 800 may include one or more memories 802. The memory stores instructions 804, and the instructions may be run on the processor, so that the apparatus 800 performs the methods described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or stored in the processor.

Optionally, the apparatus 800 may further include a transceiver 805 and/or an antenna 806. The processor 801 may be referred to as a processing unit, and controls the apparatus 800. The transceiver 805 may be referred to as a transceiver unit, a transceiver machine, a transceiver circuit, a transceiver, or the like, and is configured to implement receiving and sending functions.

The processor and the transceiver that are described in this application may be implemented on an integrated circuit (integrated circuit, IC), an analog IC, a radio frequency integrated circuit RFIC, a hybrid signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-channel metal oxide semiconductor (N-channel metal oxide semiconductor, NMOS), a P-channel metal oxide semiconductor (P-channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiments may be the network device or the terminal. However, a scope of the apparatus described in this application is not limited thereto, and a structure of the apparatus may not be limited to that shown in FIG. 18. The apparatus may be an independent device, or may be a part of a large device. For example, the apparatus may be: (1) an independent integrated circuit IC, a chip, a chip system, or a subsystem; (2) a set having one or more ICs, where optionally, the IC set may also include a storage component configured to store data and/or instructions; (3) an ASIC, for example, a modem (an MSM); (4) a module that may be embedded in another device; (5) a receiver, a terminal, an intelligent terminal, a cellular phone, a wireless device, a handheld device, a mobile unit, a vehicle-mounted device, a network device, a cloud device, an artificial intelligence device, or the like; and (6) others.

FIG. 19 is a diagram of a structure of a terminal. For ease of description, FIG. 19 shows only main components of the terminal. As shown in FIG. 19, the terminal 900 includes a processor, a memory, a control circuit, an antenna, and an input/output apparatus. The processor is mainly configured to process a communication protocol and communication data, control the entire terminal, execute a software program, and process data of the software program. The memory is mainly configured to store the software program and data. A radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user.

After the terminal is powered on, the processor may read the software program in a storage unit, parse and execute instructions of the software program, and process the data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in the form of the electromagnetic wave by using the antenna. When data is sent to the terminal, the radio frequency circuit receives a radio frequency signal by using the antenna, further converts the radio frequency signal into a baseband signal, and outputs the baseband signal to the processor. The processor converts the baseband signal into data, and processes the data.

For ease of description, FIG. 19 shows only one memory and one processor. In an actual terminal, there may be a plurality of processors and memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data. The central processing unit is mainly configured to control the entire terminal, execute the software program, and process the data of the software program. Functions of the baseband processor and the central processing unit are integrated into the processor in FIG. 19. A person skilled in the art may understand that the baseband processor and the central processing unit each may be an independent processor, and are interconnected by using technologies such as a bus. A person skilled in the art may understand that the terminal may include a plurality of baseband processors to adapt to different network standards, and the terminal may include a plurality of central processing units to enhance a processing capability of the terminal. All the components of the terminal may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor; or may be stored in the storage unit in a form of a software program, where the processor executes the software program to implement a baseband processing function.

In an example, the antenna having receiving and sending functions and the control circuit may be considered as a transceiver unit 911 of the terminal 900, and the processor that has a processing function may be considered as a processing unit 912 of the terminal 900. As shown in FIG. 19, the terminal 900 includes the transceiver unit 911 and the processing unit 912. The transceiver unit may also be referred to as a transceiver, a transceiver machine, a transceiver apparatus, or the like. Optionally, a component that is in the transceiver unit 911 and that is configured to implement the receiving function may be considered as a receiving unit, and a component that is in the transceiver unit 911 and that is configured to implement the sending function may be considered as a sending unit. That is, the transceiver unit 911 includes the receiving unit and the sending unit. For example, the receiving unit may also be referred to as a receiver, a receive machine, or a receiving circuit, and the sending unit may also be referred to as a transmitter, a transmitting machine, or a transmitting circuit. Optionally, the receiving unit and the sending unit may be one integrated unit, or may be a plurality of independent units. The receiving unit and the sending unit may be in one geographical position, or may be distributed in a plurality of geographical positions.

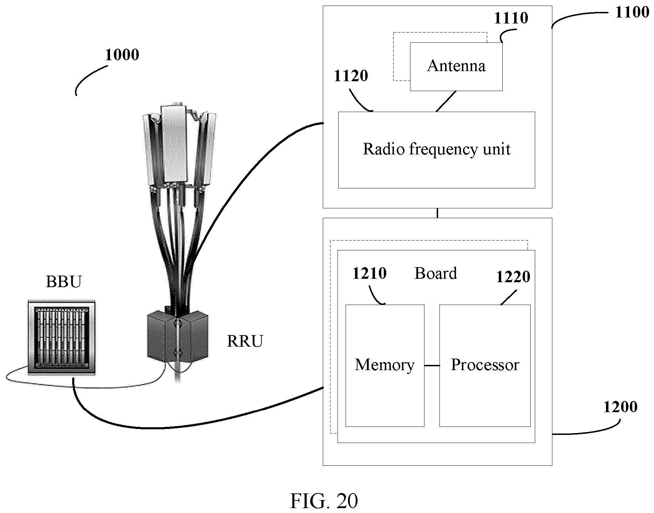

FIG. 20 is a diagram of a structure of a network device 1000 according to an embodiment of this application. The apparatus 700 or the apparatus 800 above may be configured in the network device 1000. Alternatively, the apparatus 700 or the apparatus 800 may be the network device 1000. In other words, the network device 1000 may perform the operations performed by the network device in the foregoing method embodiments.

The network device 1000 may include one or more radio frequency units, such as a remote radio unit (remote radio unit, RRU) 1100 and one or more baseband units (baseband units, BBUs) (also referred to as a digital unit (digital unit, DU)) 1200. The RRU 1100 may be referred to as a transceiver unit, a transceiver machine, a transceiver circuit, a transceiver, or the like, and may include at least one antenna 1110 and a radio frequency unit 1120. The RRU 1100 is mainly configured to: receive and send a radio frequency signal, and perform conversion between the radio frequency signal and a baseband signal. The BBU 1200 is mainly configured to: perform baseband processing, control the network device 1000, and so on. The RRU 1100 and the BBU 1200 may be physically disposed together, or may be physically disposed separately, that is, in a distributed base station.

The BBU 1200 is a control center of the network device 1000, may also be referred to as a processing unit, and is mainly configured to perform baseband processing functions such as channel coding, multiplexing, modulation, and spectrum spreading. For example, the BBU (the processing unit) 1200 may be configured to control the network device 1000 to perform an operation procedure related to a transmitting end or a receiving end in the foregoing method embodiments.

In an example, the BBU 1200 may include one or more boards. A plurality of boards may jointly support a radio access network (for example, an LTE system or a 1G system) of a single access standard, or may respectively support radio access networks of different access standards. The BBU 1200 further includes a memory 1210 and a processor 1220. The memory 1210 is configured to store necessary instructions and necessary data. The processor 1220 is configured to control the network device 1000 to perform a necessary action, for example, configured to control the network device 1000 to perform the operation procedure related to the transmitting end or the receiving end in the foregoing method embodiments. The memory 1210 and the processor 1220 may serve one or more boards. In other words, a memory and a processor may be disposed on each board. Alternatively, a plurality of boards may share a same memory and a same processor. In addition, a necessary circuit may further be disposed on each board.

In a possible implementation, with development of a system-on-chip (system-on-chip, SoC) technology, all or a part of functions of the parts 1200 and 1100 may be implemented by using the SoC technology, for example, implemented by using one base station function chip. The base station function chip integrates components such as a processor, a memory, and an antenna port. A program of a base station-related function is stored in the memory, and the processor executes the program to implement the base station-related function. Optionally, the base station function chip can also read an external memory of the chip, to implement the base station-related function.

It should be understood that the structure of the network device shown in FIG. 20 is merely a possible form, but should not constitute any limitation on embodiments of this application. In this application, a possibility that there may be a base station structure in another form in the future is not excluded.

It should be understood that, in a possible design, the steps in the method embodiments provided in this application may be implemented by using a hardware integrated logic circuit in the processor or by using instructions in a form of software. The steps in the methods disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein.

It should be noted that, the processor in embodiments of this application may be an integrated circuit chip, and has a signal processing capability. In an implementation process, the steps in the foregoing method embodiments may be implemented by using the hardware integrated logic circuit in the processor or by using instructions in the form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another appropriate type.

This application further provides a computer program product. The computer program product includes computer program code. When the computer program code is run on a computer, the computer is enabled to perform the steps or procedures performed by the terminal in any one of the foregoing method embodiments.

This application further provides a computer program product. The computer program product includes computer program code. When the computer program code is run on a computer, the computer is enabled to perform the steps or procedures performed by the network device in any one of the foregoing method embodiments.

This application further provides a computer-readable storage medium. The computer-readable storage medium stores program code. When the program code is run on a computer, the computer is enabled to perform the steps or procedures performed by the terminal in any one of the foregoing method embodiments.

This application further provides a computer-readable storage medium. The computer-readable storage medium stores program code. When the program code is run on a computer, the computer is enabled to perform the steps or procedures performed by the network device in any one of the foregoing method embodiments.

This application further provides a communications system, including a terminal and a network device.

The foregoing apparatus embodiments completely correspond to the foregoing method embodiments. A corresponding module or unit performs a corresponding step. For example, a transceiver unit or a transceiver performs a receiving step or a sending step in the method embodiments, and a processing unit or a processor may perform a step other than the sending step or the receiving step.

In embodiments of this application, the terms and abbreviations are all examples given for ease of description, and should not constitute any limitation on this application. This application does not exclude a possibility of defining another term that can implement a same or similar function in an existing or a future protocol.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated in figures, both a computing device and an application that runs on the computing device may be components. One or more components may reside within a process and/or a thread of execution, and a component may be located on one computer and/or distributed between two or more computers. In addition, these components may be executed from a variety of computer-readable storage media having various data structures stored thereon. For example, the components may communicate by using a local and/or remote process and based on a signal having one or more data packets (for example, data from two components interacting with another component in a local system, a distributed system, and/or across a network such as the Internet interacting with another system by using a signal).

A person of ordinary skill in the art may be aware that, various illustrative logical blocks (illustrative logical blocks) and steps (steps) described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the apparatus embodiments described above are merely examples. For example, the division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, to be specific, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

In the foregoing embodiments, all or a part of the functions of the functional units may be implemented by using software, hardware, firmware, or any combination thereof. When software is used to implement the functions, all or a part of the functions may be implemented in a form of a computer program product. The computer program product includes one or more computer instructions (programs). When the computer program instructions (programs) are loaded and executed on a computer, the procedures or functions according to embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

When the function is implemented in a form of a software functional unit and sold or used as an independent product, the function may be stored in a computer-readable storage medium. Based on such an understanding, the technical solutions of this application essentially, the part contributing to the prior art, or some of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An uplink transmission method, wherein the method comprises:
sending uplink data to a network device, and starting a first timer, wherein duration of the first timer is shortest duration before a retransmission grant for the uplink data is expected to be received; and
starting a second timer at a moment t1 when a first condition is met, and monitoring the retransmission grant for the uplink data before the second timer expires or is stopped, wherein t1=t2+T, t2 represents a moment at which the first timer expires, T represents a time interval, the time interval is a time interval between the moment at which the first timer expires and a start moment of next active time, and the first condition is that the moment at which the first timer expires is in inactive time and the time interval is less than a remaining scheduling time period of the uplink data.

2. The method according to claim 1, wherein the method further comprises:
starting, when a second condition is met, the second timer at the moment at which the first timer expires, and monitoring the retransmission grant for the uplink data before the second timer expires or is stopped, wherein the second condition is that the moment at which the first timer expires is in active time, or that the moment at which the first timer expires is in the inactive time and the time interval is greater than or equal to the remaining scheduling time period of the uplink data.

3. The method according to claim 1, wherein the method further comprises:
receiving configuration information from the network device; and
the starting a second timer at a moment t1 when a first condition is met comprises:
determining, based on the configuration information, to start the second timer at the moment t1 when the first condition is met.

4. The method according to claim 2, wherein the method further comprises:
receiving configuration information from the network device; and
the starting, when a second condition is met, the second timer at the moment at which the first timer expires comprises:
determining, based on the configuration information, to start, when the second condition is met, the second timer at the moment at which the first timer expires.

5. An uplink transmission method, wherein the method comprises:
receiving uplink data from a terminal, and starting a first timer, wherein duration of the first timer is shortest duration before the terminal expects to receive a retransmission grant for the uplink data;
starting a second timer at a moment t1 when a first condition is met, and sending the retransmission grant for the uplink data to the terminal before the second timer expires or is stopped, wherein t1=t2+T, t2 represents a moment at which the first timer expires, T represents a time interval, the time interval is a time interval between the moment at which the first timer expires and a start moment of next active time, and the first condition is that the moment at which the first timer expires is in inactive time and the time interval is less than a remaining scheduling time period of the uplink data; and
starting, when a second condition is met, the second timer at the moment at which the first timer expires, and sending the retransmission grant for the uplink data to the terminal before the second timer expires or is stopped, wherein the second condition is that the moment at which the first timer expires is in active time, or that the moment at which the first timer expires is in the inactive time and the time interval is greater than or equal to the remaining scheduling time period of the uplink data.

6. The method according to claim 5, wherein before the receiving uplink data from a terminal, the method further comprises:
sending first uplink grant information to the terminal when the first condition is met, wherein the first uplink grant information is for scheduling the uplink data, and the first uplink grant information indicates a first modulation and coding scheme MCS; and
sending second uplink grant information to the terminal when the second condition is met, wherein the second uplink grant information is for scheduling the uplink data, and the second uplink grant information indicates a second MCS, wherein a modulation order corresponding to the first MCS is greater than a modulation order corresponding to the second MCS, and/or a code rate corresponding to the first MCS is greater than a code rate corresponding to the second MCS.

7. The method according to claim 5, wherein before the receiving uplink data from a terminal, the method further comprises:
sending first uplink grant information to the terminal when the first condition is met, wherein the first uplink grant information is for scheduling the uplink data, and the first uplink grant information indicates a first transmission resource; and
sending second uplink grant information to the terminal when the second condition is met, wherein the second uplink grant information is for scheduling the uplink data, the second uplink grant information indicates a second transmission resource, and a quantity of first transmission resources is less than a quantity of second transmission resources.

8. The method according to any one of claims 5 to 7, wherein the method further comprises:
sending configuration information to the terminal, wherein the configuration information indicates the terminal to start the second timer at the moment t1 when the first condition is met, and start, when the second condition is met, the second timer at the moment at which the first timer expires.

9. An uplink transmission method, wherein the method comprises:
sending first uplink grant information to a terminal when a first condition is met, wherein the first uplink grant information is for scheduling uplink data, the first uplink grant information indicates a first modulation and coding scheme MCS, the first condition is that a moment at which a first timer expires is in inactive time and a time interval is less than a remaining scheduling time period of the uplink data, and the time interval is a time interval between the moment at which the first timer expires and a start moment of next active time;
sending second uplink grant information to the terminal when a second condition is met, wherein the second uplink grant information is for scheduling the uplink data, and the second uplink grant information indicates a second MCS, wherein a modulation order corresponding to the first MCS is greater than a modulation order corresponding to the second MCS, and/or a code rate corresponding to the first MCS is greater than a code rate corresponding to the second MCS, and the second condition is that the moment at which the first timer expires is in active time, or that the moment at which the first timer expires is in the inactive time and the time interval is greater than or equal to the remaining scheduling time period of the uplink data; and
receiving the uplink data from the terminal, and starting the first timer, wherein duration of the first timer is shortest duration before the terminal expects to receive a retransmission grant for the uplink data.

10. The method according to claim 9, wherein the first uplink grant information further indicates a first transmission resource, the second uplink grant information further indicates a second transmission resource, and a quantity of first transmission resources is less than a quantity of second transmission resources.

11. The method according to claim 9 or 10, wherein the method further comprises:
starting a second timer at a moment t1 when the first condition is met, and sending the retransmission grant for the uplink data to the terminal before the second timer expires or is stopped, wherein t1=t2+T, t2 represents the moment at which the first timer expires, and T represents the time interval; and
starting, when the second condition is met, the second timer at the moment at which the first timer expires, and sending the retransmission grant for the uplink data to the terminal before the second timer expires or is stopped.

12. The method according to claim 11, wherein the method further comprises:
sending configuration information to the terminal, wherein the configuration information indicates the terminal to start the second timer at the moment t1 when the first condition is met, and start, when the second condition is met, the second timer at the moment at which the first timer expires.

13. An uplink transmission method, wherein the method comprises:
sending uplink data to a network device; and
monitoring, when a time interval between a moment at which the sending of the uplink data is completed and a start moment of next active time is less than a remaining scheduling time period of the uplink data, a retransmission grant for the uplink data at the start moment of the next active time until the retransmission grant for the uplink data is obtained through monitoring or until the next active time ends.

14. The method according to claim 13, wherein the method further comprises:
starting, when the time interval between the moment at which the sending of the uplink data is completed and the start moment of the next active time is greater than or equal to the remaining scheduling time period of the uplink data, a first timer at the moment at which the sending of the uplink data is completed, starting a second timer at a moment at which the first timer expires, and monitoring the retransmission grant for the uplink data before the second timer expires or is stopped, wherein duration of the first timer is shortest duration before the retransmission grant for the uplink data is expected to be received.

15. The method according to claim 13, wherein the method further comprises:
receiving configuration information from the network device; and
the monitoring, when a time interval between a moment at which the sending of the uplink data is completed and a start moment of next active time is less than a remaining scheduling time period of the uplink data, a retransmission grant for the uplink data at the start moment of the next active time until the retransmission grant for the uplink data is obtained through monitoring or until the next active time ends comprises:
determining, based on the configuration information, to monitor, when the time interval is less than the remaining scheduling time period, the retransmission grant for the uplink data at the start moment of the next active time until the retransmission grant for the uplink data is obtained through monitoring or until the next active time ends.

16. The method according to claim 14, wherein the method further comprises:
receiving configuration information from the network device, wherein
the starting, when the time interval between the moment at which the sending of the uplink data is completed and the start moment of the next active time is greater than or equal to the remaining scheduling time period of the uplink data, a first timer at the moment at which the sending of the uplink data is completed comprises:
determining, based on the configuration information, to start, when the time interval is greater than or equal to the remaining scheduling time period, the first timer at the moment at which the sending of the uplink data is completed.

17. An uplink transmission method, wherein the method comprises:
receiving uplink data from a terminal;
when a time interval between a moment at which the uplink data is received and a start moment of next active time is less than a remaining scheduling time period of the uplink data, and the uplink data is not successfully received, sending a retransmission grant for the uplink data to the terminal before the next active time ends; and
when the time interval between the moment at which the uplink data is received and the start moment of the next active time is greater than or equal to the remaining scheduling time period of the uplink data, and the uplink data is not successfully received, starting a first timer at the moment at which the uplink data is received, starting a second timer at a moment at which the first timer expires, and sending the retransmission grant for the uplink data to the terminal before the second timer expires or is stopped, wherein duration of the first timer is shortest duration before the terminal expects to receive the retransmission grant for the uplink data.

18. The method according to claim 17, wherein before the receiving uplink data from a terminal, the method further comprises:
sending first uplink grant information to the terminal when the time interval is less than the remaining scheduling time period, wherein the first uplink grant information is for scheduling the uplink data, and the first uplink grant information indicates a first modulation and coding scheme MCS; and
sending second uplink grant information to the terminal when the time interval is greater than or equal to the remaining scheduling time period, wherein the second uplink grant information is for scheduling the uplink data, and the second uplink grant information indicates a second MCS, wherein a modulation order corresponding to the first MCS is greater than a modulation order corresponding to the second MCS, and/or a code rate corresponding to the first MCS is greater than a code rate corresponding to the second MCS.

19. The method according to claim 17, wherein before the receiving uplink data from a terminal, the method further comprises:
sending first uplink grant information to the terminal when the time interval is less than the remaining scheduling time period, wherein the first uplink grant information is for scheduling the uplink data, and the first uplink grant information indicates a first transmission resource; and
sending second uplink grant information to the terminal when the time interval is greater than or equal to the remaining scheduling time period, wherein the second uplink grant information is for scheduling the uplink data, the second uplink grant information indicates a second transmission resource, and a quantity of first transmission resources is less than a quantity of second transmission resources.

20. The method according to any one of claims 17 to 19, wherein the method further comprises:
sending configuration information to the terminal, wherein the configuration information indicates the terminal to monitor, when the time interval is less than the remaining scheduling time period, the retransmission grant for the uplink data at the start moment of the next active time until the retransmission grant for the uplink data is obtained through monitoring or until the next active time ends, and start, when the time interval is greater than or equal to the remaining scheduling time period, the first timer at the moment at which the uplink data is received.

21. An uplink transmission method, wherein the method comprises:
sending first uplink grant information to a terminal when a time interval between a moment at which uplink data is received and a start moment of next active time is less than a remaining scheduling time period of the uplink data, wherein the first uplink grant information is for scheduling the uplink data, and the first uplink grant information indicates a first modulation and coding scheme MCS;
sending second uplink grant information to the terminal when the time interval is greater than or equal to the remaining scheduling time period, wherein the second uplink grant information is for scheduling the uplink data, and the second uplink grant information indicates a second MCS, wherein a modulation order corresponding to the first MCS is greater than a modulation order corresponding to the second MCS, and/or a code rate corresponding to the first MCS is greater than a code rate corresponding to the second MCS; and
receiving the uplink data from the terminal.

22. The method according to claim 21, wherein the first uplink grant information further indicates a first transmission resource, the second uplink grant information further indicates a second transmission resource, and a quantity of first transmission resources is less than a quantity of second transmission resources.

23. The method according to claim 21 or 22, wherein the method further comprises:
when the time interval is less than the remaining scheduling time period, and the uplink data is not successfully received, sending a retransmission grant for the uplink data to the terminal in the next active time; and
when the time interval is greater than or equal to the remaining scheduling time period, and the uplink data is not successfully received, starting a first timer at the moment at which the uplink data is received, starting a second timer at a moment at which the first timer expires, and sending the retransmission grant for the uplink data to the terminal before the second timer expires or is stopped, wherein duration of the first timer is shortest duration before the terminal expects to receive the retransmission grant for the uplink data.

24. The method according to claim 23, wherein before the sending a retransmission grant for the uplink data to the terminal, the method further comprises:
sending configuration information to the terminal, wherein the configuration information indicates the terminal to monitor, when the time interval is less than the remaining scheduling time period, the retransmission grant for the uplink data at the start moment of the next active time until the retransmission grant for the uplink data is obtained through monitoring or until the next active time ends, and start, when the time interval is greater than or equal to the remaining scheduling time period, the first timer at the moment at which the uplink data is received.

25. A communication apparatus, wherein the apparatus is configured to perform the method according to any one of claims 1 to 4 or any one of claims 13 to 16.

26. A communication apparatus, wherein the apparatus is configured to perform the method according to any one of claims 5 to 8, any one of claims 9 to 12, or any one of claims 17 to 20.

27. A communication apparatus, comprising a processor, wherein the processor is coupled to a memory, and the memory is configured to store a program or instructions; and when the program or the instructions are executed by the processor, the apparatus is enabled to perform the method according to any one of claims 1 to 4 or any one of claims 13 to 16.

28. A communication apparatus, comprising a processor, wherein the processor is coupled to a memory, and the memory is configured to store a program or instructions; and when the program or the instructions are executed by the processor, the apparatus is enabled to perform the method according to any one of claims 5 to 8, any one of claims 9 to 12, or any one of claims 17 to 20.

29. A storage medium, wherein a computer program or instructions are stored in the storage medium; and when the computer program or the instructions are executed, a computer is enabled to perform the method according to any one of claims 1 to 4 or any one of claims 13 to 16.

30. A storage medium, wherein a computer program or instructions are stored in the storage medium; and when the computer program or the instructions are executed, a computer is enabled to perform the method according to any one of claims 5 to 8, any one of claims 9 to 12, or any one of claims 17 to 20.

31. A computer program product, comprising computer program instructions, wherein the computer program instructions enable a computer to perform the method according to any one of claims 1 to 4 or any one of claims 13 to 16.

32. A computer program product, comprising computer program instructions, wherein the computer program instructions enable a computer to perform the method according to any one of claims 5 to 8, any one of claims 9 to 12, or any one of claims 17 to 20.

33. A chip, comprising a processor, configured to invoke a computer program from a memory and run the computer program, to enable a communication apparatus on which the chip is installed to perform the method according to any one of claims 1 to 4 or any one of claims 13 to 16.

34. A chip, comprising a processor, configured to invoke a computer program from a memory and run the computer program, to enable a communication apparatus on which the chip is installed to perform the method according to any one of claims 5 to 8, any one of claims 9 to 12, or any one of claims 17 to 20.
